(19) Europäisches Patentamt
European Patent Office
Office européen des brevets

(11) **EP 4 660 680 A1**

(12) **EUROPEAN PATENT APPLICATION**
published in accordance with Art. 153(4) EPC

(43) Date of publication:
**10.12.2025 Bulletin 2025/50**

(21) Application number: **24847982.6**

(22) Date of filing: **10.07.2024**

(51) International Patent Classification (IPC):
*G02B 7/105* (2021.01)   *G02B 7/09* (2021.01)
*G02B 13/00* (2006.01)   *G03B 13/32* (2021.01)

(52) Cooperative Patent Classification (CPC):
G02B 7/09; G02B 7/105; G02B 13/00; G03B 13/32;
G03B 13/36; H04M 1/02; H04N 23/50; H04N 23/55;
H04N 23/57

(86) International application number:
**PCT/CN2024/104833**

(87) International publication number:
**WO 2025/026023 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.07.2023 CN 202310962515**

(71) Applicant: **Huawei Technologies Co., Ltd.
Shenzhen, Guangdong 518129 (CN)**

(72) Inventors:
• **GONG, Jinhui
  Shenzhen, Guangdong 518129 (CN)**
• **ZHANG, Kaiyuan
  Shenzhen, Guangdong 518129 (CN)**
• **WANG, Qi
  Shenzhen, Guangdong 518129 (CN)**
• **HAO, Dawei
  Shenzhen, Guangdong 518129 (CN)**

(74) Representative: **Maiwald GmbH
Engineering
Elisenhof
Elisenstrasse 3
80335 München (DE)**

(54) **LENS ASSEMBLY, CAMERA MODULE, AND ELECTRONIC DEVICE**

(57)    Embodiments of this application provide a camera lens component, a camera module, and an electronic device. The camera lens component includes two lens element units, and a first lens element unit close to an object side is movably disposed, to implement switching between a working state and a non-working state of the camera lens component. When the camera lens component is in the working state, the camera lens component can implement high-quality imaging with a wide aperture and a large target surface. When the camera lens component is switched to the non-working state, a spacing between the two lens element units may be compressed to reduce a length and a total track length of the camera lens component. This implements thinning of the camera lens component and the camera module. In other words, the camera lens component can ensure high imaging quality in the working state and can also ensure miniaturization in the non-working state. In addition, there is a large spacing between the two lens element units, so that the camera lens component and the camera module can be thinned more significantly in the non-working state, to obtain an ultra-thin camera module. This better meets a thinning requirement of the electronic device.

FIG. 2

## Description

This application claims priority to Chinese Patent Application No. 202310962515.9, filed with the China National Intellectual Property Administration on July 31, 2023 and entitled "CAMERA LENS COMPONENT, CAMERA MODULE, AND ELECTRONIC DEVICE", which is incorporated herein by reference in its entirety.

## TECHNICAL FIELD

This application relates to the field of camera technologies, and in particular, to a camera lens component, a camera module, and an electronic device.

## BACKGROUND

In recent years, with development of camera technologies, camera modules have become indispensable functional components in electronic products such as a mobile phone, a tablet computer, a notebook computer, and a wearable device. With multi-functional development of electronic devices, image shooting effect and a requirement of the electronic devices are increasingly aligned with those of a single-lens reflex camera, and functional effect of the camera modules gradually becomes one of important features of the electronic devices.

Currently, the camera module usually includes a camera lens component and an image sensor. The camera lens component is usually formed by sequentially arranging a plurality of lens elements in an optical axis direction. Light is projected to the image sensor after being imaged through the camera lens component, to implement conversion from an optical image to an electrical signal. Therefore, performance of the camera lens component directly determines imaging performance of the camera module. As image shooting requirements are increasingly high, to increase an amount of admitted light of an entire imaging system, imaging camera lenses gradually develop toward a high-quality imaging direction in which a wide aperture and a large target surface are considered. However, for an optical camera lens, increasing an aperture and a target surface usually causes an increase in a size of the camera lens component, for example, an increase in a length of the camera lens component and an increase in a total track length cause a large thickness of the entire camera module. This is not conducive to miniaturization and ultra-thin development of the electronic device. The total track length has become a bottleneck that restricts a high-quality imaging design of a large-target-surface wide-aperture camera lens. Therefore, a camera lens component is urgently needed to meet requirements of high imaging quality and a thinning design.

## SUMMARY

This application provides a camera lens component, a camera module, and an electronic device. When the camera lens component is in a working state, a feature of both a wide aperture and a large target surface can be implemented, to implement high-quality imaging. When the camera lens component is in a non-working state, a total track length is small, to implement ultra-thinness of the camera module, and meet a thinning design requirement of the electronic device.

A first aspect of this application provides a camera lens component, including at least a first lens element unit and a second lens element unit that are sequentially arranged from an object side to an image side along an optical axis, where the first lens element unit and the second lens element unit each include a lens element with focal power. In addition, there are a plurality of lens elements in the first lens element unit. The foregoing two-lens element unit architecture forms the camera lens component. A quantity of lens elements, an architecture layout, and the like are appropriately allocated, so that a wide aperture and a large target surface of the camera lens component can be designed, the camera lens component has good optical quality, and imaging quality and imaging effect are significantly improved.

The camera lens component may include a working state and a non-working state. The first lens element unit is movably disposed along the optical axis, and all lens elements of the first lens element unit move toward the second lens element unit along the optical axis, so that the camera lens component switches from the working state to the non-working state.

When the camera lens component is in a working state, the camera lens component satisfies a conditional expression IMH/F#>4.0, where IMH is a half of image height of the camera lens component, and F# is an f-number of the camera lens component, to ensure that the camera lens component has a large half of image height and a small f-number. In this way, when the camera lens component is in a working state, the camera lens component can have a feature of both a wide aperture and a large target surface, and has high imaging quality. This implements high-quality imaging of the camera lens component with both a large target surface and a wide aperture.

When the camera lens component switches from a working state to a non-working state, all lens elements of the first lens element unit move toward the second lens element, to compress a spacing between the first lens element unit and the second lens element unit. This shortens a length and a total track length of the camera lens component. In this way, when the camera lens component is in the non-working state, the camera lens component has a small length and a small total track length. This helps reduce a thickness of the camera module, to meet a thinning design requirement of the electronic device.

In conclusion, the camera lens component may be switched between the working state and the non-working state by moving the first lens element unit. When the camera lens component is in a working state, a spacing between the two lens element units may be increased, that is, a total track length of the camera lens component is increased. In this way, the camera lens component has a small f-number and a large half of image height, so that the camera lens component has a feature of both a wide aperture and a large target surface, imaging quality and imaging effect are improved, and a telephoto function is easily implemented. When the camera lens component is in a non-working state, a spacing between two lens element units may be compressed, to reduce a length and a total track length of the camera lens component, and reduce thicknesses of the camera lens component and the camera module. This meets a thinning design requirement of the electronic device. In other words, the camera lens component can ensure miniaturization and thinning in a non-working state, and can also consider functional features of a wide aperture, a large target surface, and telephoto in a working state, to ensure imaging quality.

When the camera lens component is in a working state, the camera lens component further satisfies a conditional expression $0.2 < GD/TTL < 0.5$, where GD is a spacing between the first lens element unit and the second lens element unit on the optical axis, and TTL is a total track length of the camera lens component. When the total track length is fixed, there is a large spacing GD between the first lens element unit and the second lens element unit, to facilitate implementation of an optical path, so as to ensure that the camera lens component can implement high-quality imaging with a wide aperture and a large target surface design when the camera lens component is in a working state. In addition, when the camera lens component is switched to a non-working state by moving the first lens element unit, the compressed spacing may enable the camera lens component to have a smaller length and a smaller total track length in the non-working state. This significantly compresses lengths of the camera lens component and the camera module in the non-working state, and significantly reduces a thickness of the camera module in the non-working state. In this way, an ultra-thin camera module in the non-working state is obtained. This is more conducive to meeting a thinning requirement of the electronic device.

In addition, when the camera lens component is in a working state, a focal length of the camera lens component may be adjusted by moving all lens elements in the first lens element unit or at least one lens element that is in the first lens element unit and that is close to the image side along the optical axis. In this way, a function like focusing or zooming is implemented, so that there is a large spacing GD between the first lens element unit and the second lens element unit, and a range of moving of all or some lens elements of the first lens element unit that are close to the image side can be further expanded. This improves operation flexibility of focusing, zooming, or the like, better facilitates implementation of a function like focusing or zooming, and further improves imaging quality and imaging effect.

In a possible implementation, when the camera lens component is in a working state, the f-number of the camera lens component satisfies the following: $1.1 < F\# < 2$, and the f-number is small. This ensures that the camera lens component has a feature of a wide aperture, and significantly improves imaging quality and imaging effect.

In a possible implementation, when the camera lens component is in a working state, the camera lens component further satisfies a conditional expression: $0.20 < GD/EFL < 0.60$, where EFL is a focal length of the camera lens component, and the camera lens component has a long focal length and a large spacing GD. This helps further implement high-quality imaging in a design of a large target surface of the camera lens component. In addition, there is a large spacing between the first lens element unit and the second lens element unit. This further helps implement significant thinning of the camera lens component in a non-working state.

In a possible implementation, when the camera lens component is in a working state, the camera lens component further satisfies a conditional expression: $0.9 < EFL1/EFL < 1.1$, where EFL1 is a focal length of the first lens element unit. Focal power of the first lens element unit is appropriately allocated, so that the first lens element unit has a large refraction capability, thereby ensuring imaging quality and imaging effect of the camera lens component.

In a possible implementation, when the camera lens component is in a working state, the camera lens component further satisfies a conditional expression: $IMH/TTL < 0.7$, so that a half of image height and a total track length of the camera lens component are large. This further ensures that the camera lens component has a feature of a large target surface, and also helps the camera lens component implement a telephoto function.

In a possible implementation, when the camera lens component is in a working state, the camera lens component further satisfies a conditional expression: $0.6 < EFL/TTL < 0.9$. In the working state, a total track length of the camera lens component is large, so that both a focal length and the total track length of the camera lens component are large, so that the camera lens component can implement features of a wide aperture, a large target surface, and telephoto. This helps further improve imaging quality and imaging effect.

In a possible implementation, when the camera lens component is in a working state, the camera lens component further satisfies a conditional expression: $EFL*\tan(HFOV) \geq 8.00\,mm$, where HFOV is a half field of view of the camera lens component. It is ensured that the camera lens component has a large imaging range, and imaging of the camera lens component has a larger image height. This further ensures that the camera lens component can implement a large target surface design, and improves imaging quality and imaging effect of the camera lens component.

In a possible implementation, a quantity of lens elements in the first lens element unit is greater than or equal to 4, and the quantity of lens elements in the first lens element unit is appropriately allocated, to ensure a light refraction capability of the first lens element unit. This helps implement a wide aperture and large target surface design of the camera lens component, and ensure imaging quality and imaging effect.

In a possible implementation, a quantity of lens elements in the second lens element unit is less than or equal to 3. This helps reduce a length and a total track length of the camera lens component while ensuring imaging quality and imaging effect of the camera lens component, and further helps implement thinning of the camera lens component and the camera module. In addition, architecture design complexity and costs of the camera lens component can also be reduced, to facilitate implementation.

In a possible implementation, an aperture is further included. The aperture is located on a side that is of the first lens element unit and that faces the object side, and the aperture is a variable aperture with a variable opening, so that the camera lens component can provide different depth of field ranges for different image shooting scenes. This meets image shooting requirements of a plurality of scenes.

In a possible implementation, lens elements of the first lens element unit include a first lens element, a second lens element, a third lens element, a fourth lens element, and a fifth lens element, lens elements of the second lens element unit include a sixth lens element and a seventh lens element, the first lens element, the fifth lens element, and the sixth lens element each have positive focal power, and the second lens element, the fourth lens element, and the seventh lens element each have negative focal power. The focal power of each lens element is appropriately allocated, so that a wide aperture and a large target surface are designed when the camera lens component is in a working state.

In a possible implementation, at least one of an object-side surface and an image-side surface of the sixth lens element is a toric surface, and at least one of an object-side surface and an image-side surface of the seventh lens element is a toric surface, so that an incident angle of light on the image sensor can be adjusted. This further facilitates implementation of a large target surface design, improves sensitivity of the second lens element unit, and further improves imaging quality and imaging effect of the camera lens component.

A second aspect of this application provides a camera module, including at least an image sensor and any one of the foregoing camera lens component. The image sensor is located on a side that is of the camera lens component and that faces an image side. The camera lens component is included, so that the camera lens component can ensure miniaturization and thinning in a non-working state, and can also consider functional features of a wide aperture, a large target surface, and telephoto in a working state, to ensure imaging quality. In this way, a wide aperture, a large target surface, and a telephoto function of the camera module are implemented while a thinning requirement of the electronic device can be met. In addition, one camera module can maintain high image shooting quality while ensuring performance of a primary camera module and a long-focus module, to optimize a spatial layout of the electronic device, reduce costs of the camera module of the electronic device, and improve performance and experience of the electronic device.

A third aspect of this application provides an electronic device, including at least a housing and the foregoing camera module, where the camera module is disposed on the housing.

When a camera lens component is in a working state, at least a part of a first lens element unit of the camera lens component is located outside the housing, to release a freedom degree of a total track length required by the camera lens component in the working state, and implement high-quality imaging with a wide aperture and a large target surface. In addition, impact of the total track length and the length of the camera lens component on a thickness of the electronic device can be reduced. This facilitates a thinning design of the electronic device while ensuring high image shooting performance of the electronic device.

When the camera lens component switches from the working state to a non-working state, the first lens element unit moves toward the housing along an optical axis, to compress a spacing between the first lens element unit and a second lens element unit, thereby significantly reducing a length of the camera module in the non-working state. The ultra-thin camera module occupies small space in the electronic device. When the camera lens component is in a non-working state, even if the entire camera module is placed in the electronic device, a thickness design of the electronic device is not greatly restricted, thereby facilitating thinning of the electronic device.

**BRIEF DESCRIPTION OF DRAWINGS**

FIG. 1 is a diagram of a structure of an electronic device according to an embodiment of this application;
FIG. 2 is a diagram of a structure of a camera lens component in a camera module in a working state according to an embodiment of this application;
FIG. 3 is a diagram of a structure of a camera lens component in a camera module in a non-working state according to an embodiment of this application;

FIG. 4 is a diagram of a simulation structure when a camera lens component in a camera module is in a working state according to Embodiment 1 of this application;

FIG. 5 is a curve diagram of a modulation transfer function of a camera module according to Embodiment 1 of this application;

FIG. 6 is a diagram of a simulation structure when a camera lens component in a camera module is in a working state according to Embodiment 2 of this application;

FIG. 7 is a curve diagram of a modulation transfer function of a camera module according to Embodiment 2 of this application;

FIG. 8 is a diagram of a simulation structure when a camera lens component in a camera module is in a working state according to Embodiment 3 of this application;

FIG. 9 is a curve diagram of a modulation transfer function of a camera module according to Embodiment 3 of this application;

FIG. 10 is a diagram of a simulation structure when a camera lens component in a camera module is in a working state according to Embodiment 4 of this application;

FIG. 11 is a curve diagram of a modulation transfer function of a camera module according to Embodiment 4 of this application;

FIG. 12 is a diagram of a simulation structure when a camera lens component in a camera module is in a working state according to Embodiment 5 of this application;

FIG. 13 is a curve diagram of a modulation transfer function of a camera module according to Embodiment 5 of this application;

FIG. 14 is a diagram of a simulation structure when a camera lens component in a camera module is in a working state according to Embodiment 6 of this application; and

FIG. 15 is a curve diagram of a modulation transfer function of a camera module according to Embodiment 6 of this application.

Description of reference numerals:
100: electronic device;

101: camera module;
10: camera lens component;

110: first lens element unit;
11: first lens element; 12: second lens element; 13: third lens element; 14: fourth lens element; 15: fifth lens element;
120: second lens element unit;
16: sixth lens element; 17: seventh lens element;
130: aperture;

20: image sensor;
30: light filter;

102: housing;
103: speaker hole; and
104: data interface.

## DESCRIPTION OF EMBODIMENTS

Terms used in implementations of this application are merely used to explain specific embodiments of this application, but are not intended to limit this application.

For ease of understanding, related technical terms in embodiments of this application are first explained and described.

Object side: bounded by a camera lens component, is a side on which a to-be-shot object is located, and a surface that is of a component like a lens element or an optical element and that faces the object side is an object-side surface.

Image side: bounded by the camera lens component, is a side on which an image of the to-be-shot object is located, and a surface that is of a component like a lens element or an optical element and that faces the image side is an image-side surface.

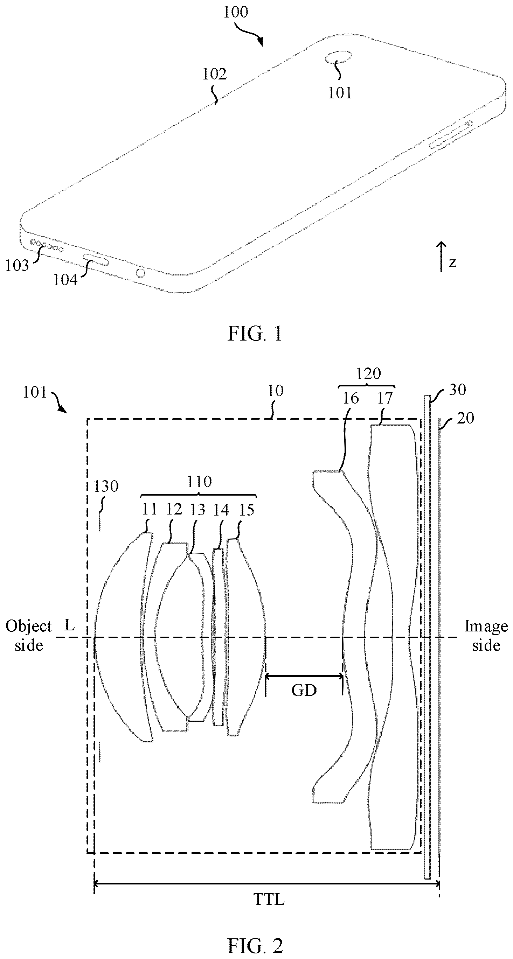

Optical axis: is a light ray passing through a center of each lens element of the camera lens component (refer to a dashed axis L in FIG. 2).

Imaging surface: is a carrier surface that is located on image sides of all lens elements in the camera lens component and that is of imaging formed after light sequentially passes through the lens elements in the camera lens component. In embodiments of this application, the imaging surface may be a photosensitive surface of an image sensor.

A half of image height (half of image height, IMH for short in embodiments of this application) is a half of full image height of an image formed by the camera lens component, and is a maximum radius of an imaging circle.

Focal power is equal to a difference between a convergence degree of an image-side beam and a convergence degree of an object-side beam, and represents a refraction capability of a lens element on an incident parallel beam.

Positive focal power indicates that a lens element has a positive focal length and has effect of converging light.

Negative focal power indicates that a lens element has a negative focal length and has effect of diverging light.

Abbe number: is also referred to as a dispersion coefficient, is a difference ratio of refractive indexes of an optical material at different wavelengths, and indicates a dispersion degree of the material.

Refractive index: is a ratio of a speed of light in a vacuum (air) to a speed of light in a lens element material. A higher refractive index of a lens element indicates a stronger refraction capability of incident light. A higher refractive index indicates a thinner lens element. To be specific, when a center thickness of the lens element is the same, and a degree and a material is the same, a lens element with a higher refractive index is thinner than a lens element with a lower refractive index.

Curvature radius: is the reciprocal of curvature. Curvature of a plane curve is a rotation rate of a tangent angle of a point on the curve to an arc length. The curvature is defined by the differential, indicating a degree that the curve deviates from a straight line.

Focal length: is also referred to as a focal length. The focal length is usually represented by an effective focal length (effective focal length, EFL for short), and is different from parameters such as a front focal length and a back focal length. The focal length or the effective focal length is a measurement manner of measuring light aggregation or divergence in an optical system, and means that when an infinitely distant object forms a clear image on a focal plane by using a lens element or a lens element group, a vertical distance from an optical center of the lens element or the lens element group to the focal plane. From a practical perspective, the focal length may be understood as a distance from a center of a camera lens component to an imaging plane.

Aperture: is an apparatus configured to control an amount of light that passes through a lens element or a lens element group and enters a photosensitive surface in a camera module, and is usually fastened in the camera module. An aperture size may be represented by an F# number.

F-number F#: is a relative value (a reciprocal of a relative opening) obtained by dividing a focal length of the camera lens component by a clear aperture (an entrance pupil diameter) of the camera lens component. A smaller F# number indicates a larger amount of admitted light in a same unit time and a smaller depth of field, and background content of a photo is blurred. This produces effect similar to that of a long-focus lens.

An amount of admitted light: is a quantity of light passing through a lens element or a lens element group (namely, a camera lens component) and irradiating onto a photosensitive surface.

Target surface: is a photosensitive surface of an image sensor. A larger target surface indicates a larger amount of light sensed by the image sensor and a larger image height of imaging.

Total track length (total track length, TTL for short): also referred to as a total height or a total length, is a total length, on an optical axis, from an object-side surface to an imaging plane of a lens element that is disposed closest to an object side in a camera lens component, and is a main factor for forming a height of a camera module. In embodiments of this application, as shown in FIG. 2, the total track length TTL may be a length, on the optical axis, from an object-side surface of a lens element (for example, a first lens element) disposed closest to an object side to a photosensitive surface of an image sensor.

A length of the camera lens component is an actual length (or a mechanical length) of the camera lens component on the optical axis, namely, a length, on the optical axis, from an object-side surface of a lens element disposed closest to the object side to an image-side surface of a lens element disposed closest to an image side in the camera lens component. As shown in FIG. 2, a length of the camera lens component is a length from an object-side surface of the first lens element to an image-side surface of a seventh lens element along an optical axis L.

Field of view (field of view, FOV for short): is an included angle formed by two edges of a maximum range that is of an image of a to-be-shot object and that can pass through a lens by using the lens as a vertex. The field of view is used to determine a range of a visual field of a lens. A larger field of view indicates a larger visual field. Half field of view (half field of view, HFOV for short): is a half of a field of view.

Modulation transfer function (modulation transfer function, MTF) is evaluation of system imaging quality.

An embodiment of this application provides an electronic device. The electronic device may include but is not limited to electronic devices that can implement an image shooting function such as a mobile phone, a tablet computer (tablet personal computer), a notebook computer, a camera, an ultra-mobile personal computer (ultra-mobile personal computer, UMPC for short), a handheld computer, a walkie-talkie, a netbook, a POS machine, a personal digital assistant (personal digital assistant, PDA for short), a wearable device, a virtual reality (virtual reality, VR for short) device (for example, VR glasses, or a VR helmet), an augmented reality (augmented reality, AR for short) device (for example, AR glasses or an AR helmet), a vehicle-mounted device, and a surveillance and camera device.

In this embodiment of this application, an example in which the electronic device is a mobile phone is used. The mobile phone may be a bar phone, or the mobile phone may be a foldable mobile phone. Specifically, the following uses an example in which the electronic device is a bar phone for description.

FIG. 1 is a diagram of a structure of an electronic device according to an embodiment of this application.

As shown in FIG. 1, the electronic device 100 may include a housing 102 and a camera module 101. The housing 102 may be used as a main bearing mechanical part of the electronic device, and the camera module 101 may be disposed on the housing 102. For example, there may be an accommodating cavity in the housing 102, the camera module 101 may be assembled on the housing 102, and at least a part of the camera module 101 may be located in the accommodating cavity of the housing 102.

The camera module 101 is configured to implement an image shooting function, for example, may be configured to take a photo, record an image, and the like. An image shooting scene of the camera module 101 may include various complex and diversified image shooting application scenes, for example, different scenes such as an indoor scene, an outdoor scene, a person scene, and an environment scene.

The electronic device 100 may further include a display (not shown in the figure). The display may be fastened on a side of the housing 102, and a plane on the side on which the display is located may be used as a display surface of the electronic device 100, to display an image and the like.

In this embodiment of this application, a side on which the display surface of the electronic device 100 is located is used as a front surface of the electronic device 100, and a side opposite to the front surface is used as a back surface of the electronic device 100. A direction perpendicular to each of the front surface of the electronic device 100 and the back surface of the electronic device 100 may be a thickness direction of the electronic device 100, for example, a z direction shown in FIG. 1.

The camera module 101 may be a front-facing camera. For example, the camera module may be located on the front surface of the electronic device 100, and is configured to take a selfie or shoot another object.

Alternatively, the camera module 101 may be a rear-facing camera. As shown in FIG. 1, the camera module 101 may be located on the back surface of the electronic device 100, and is configured to shoot another object. Certainly, the camera module 101 may also be configured to take a selfie.

The electronic device 100 may include one camera module 101, or may include a plurality of camera modules 101, to meet different image shooting requirements.

The electronic device 100 may further include another mechanical part. For example, still refer to FIG. 1. The electronic device 100 may further include a speaker hole 103. The speaker hole 103 may be disposed on the housing 102, and the speaker hole 103 may be configured to play an audio and the like of the electronic device 100. A sound-emitting device (not shown in the figure) may be further disposed in the accommodating cavity of the housing 102. The sound-emitting device may be configured to form a sound, and the sound-emitting device may communicate with the speaker hole 103, so that the sound can be propagated through the speaker hole 103.

The electronic device 100 may further have a data interface 104. The data interface 104 may be disposed on the housing 102. A control circuit board (not shown in the figure) may be further disposed in the accommodating cavity of the housing 102. The control circuit board may be connected to the data interface 104. The data interface 104 may be configured to supply power to the electronic device 100. Alternatively, the data interface 104 may be configured to implement a connection between the electronic device 100 and a headset, an external multimedia device, or the like (for example, an external camera or an external projection device).

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. For example, the electronic device 100 may further include components such as a sensor, a processor, a drive structure, and a flash.

The camera module usually includes a camera lens component and an image sensor. Light may enter the camera module through the camera lens component. Specifically, light reflected by a to-be-shot object may pass through the camera lens component. The camera lens component is configured to form an optical image (an optical signal) of the to-be-shot object, for example, the camera lens component may adjust and control a light path to form an optical image, and irradiate the optical image onto the image sensor. The image sensor can implement an optical-to-electrical conversion function. The image sensor receives the optical image and converts the optical image into an electrical signal for imaging display.

Therefore, optical performance of the camera lens component greatly affects imaging quality and imaging effect of the camera module. For example, an f-number of the camera lens component affects functions such as night shot, video, background blurring, and snapshot. In other words, a camera module with a wide aperture has better imaging quality and imaging effect in scenes such as a night image shooting scene, a video recording scene, a background blurring scene, and a snapshot taking scene.

A size of a target surface of the camera lens component is also one of important factors that affect imaging quality. A camera lens component with a large target surface helps improve imaging brightness and resolution of the entire camera module, to obtain better imaging quality. In addition, the camera lens component with a large target surface design also helps implement a telephoto function, further enriches image shooting effect and improves imaging quality.

Therefore, as an image shooting requirement for an electronic device like a mobile phone is increasingly high, to further increase an amount of admitted light, an imaging system gradually develops toward a direction of a wide aperture and a large target surface, to achieve high imaging quality and high imaging effect.

However, for an optical lens, increasing an aperture and a target surface can increase an amount of admitted light of the optical imaging system, but usually increases a length and a total track length of the camera lens component. Consequently, a length of the entire camera module is large, and the camera module occupies large space in a thickness direction of the electronic device. This is not conducive to a thinning design of the electronic device. Therefore, the length and the total track length of the camera lens component become a bottleneck that restricts high imaging quality of a lens with a wide aperture and a large target surface. For example, a common primary camera module in an electronic device is restricted by a thickness and a focal range of the device. As a result, it is difficult for the primary camera module to balance features of a wide aperture and a large target surface, and image quality of the primary camera module needs to be further improved. In addition, it is usually difficult for the primary camera module to implement a telephoto function, that is, it is difficult for one camera module to balance features of both primary image shooting and telephoto. Therefore, a primary camera module and a long-focus module that are independent of each other are usually disposed in the electronic device, and a telephoto image shooting requirement is met by using the long-focus module. As a result, a module used for image shooting in the electronic device has high costs and a large volume, and there is a clear change between brightness and darkness of an image when two modules are switched, resulting in poor experience. Performance of the electronic device is affected.

In view of this, an embodiment of this application provides a camera lens component. An architecture including two lens element units is used, and a first lens element unit close to an object side is movable, to implement switching of the camera lens component between a working state and a non-working state. In this way, the camera lens component can have a wide aperture and large target surface design in the working state, to implement high-quality imaging. When the camera lens component is in the non-working state, the camera lens component has a smaller length and a smaller total track length, to implement an ultra-thin structure of the camera lens component and the camera module, and meet a thinning requirement of the electronic device.

The following describes in detail, with reference to the accompanying drawings, the camera lens component and a camera module including the camera lens component provided in embodiments of this application.

FIG. 2 is a diagram of a structure of a camera lens component in a camera module in a working state according to an embodiment of this application.

As shown in FIG. 2, the camera module 101 may include a camera lens component 10 and an image sensor 20. The image sensor 20 may be located on a side that is of the camera lens component 10 and that faces an image side, that is, the camera lens component 10 may be located between a to-be-shot object and the image sensor 20. A photosensitive surface (which may also be referred to as an imaging surface) of the image sensor 20 may face the camera lens component 10.

Light reflected by the to-be-shot object enters the camera module 101, and is imaged and irradiated onto a photosensitive surface of the image sensor 20 after passing through the camera lens component 10. The photosensitive surface of the image sensor 20 receives an optical image, converts the optical image into an image electrical signal for outputting. In this way, a function like image shooting or video recording of the camera module 101 is implemented.

To ensure light sensitivity of the image sensor 20, the image sensor 20 may be located in an accommodation cavity inside a housing of the electronic device. The camera lens component 10 may be located on a side that is of the image sensor 20 and that faces a display, or the camera lens component 10 may be located on a side that is of the image sensor 20 and that faces away from the display.

The image sensor 20 may be a charge-coupled device (charge-coupled device, CCD for short), or may be a complementary metal oxide semiconductor (complementary metal oxide semiconductor, CMOS for short). Alternatively, the image sensor 20 may be another device that can implement an optical-to-electrical conversion function.

As shown in FIG. 2, the camera module 101 may further include a light filter 30. The light filter 30 may be located between the camera lens component 10 and the image sensor 20. A dashed line L in FIG. 2 is used as an optical axis. The camera lens component 10, the light filter 30, and the image sensor 20 are sequentially arranged from an object side to an image side in a direction of the optical axis L. Light entering the camera module 101 sequentially passes through the camera lens component 10 and the light filter 30, and then is irradiated onto the photosensitive surface of the image sensor 20. The light filter 30, having a light filtering function, allows light within a specific wavelength range to pass through, to filter out stray light that is not conducive to imaging. This helps improve imaging quality.

It may be understood that, to facilitate receiving of light during image shooting, the optical axis L of the camera lens component 10 may be parallel to a thickness direction of the electronic device. In this embodiment of this application, a thickness of the camera lens component 10, the camera module 101, or the like may be a length of the camera lens component 10, the camera module 101, or the like along the optical axis L, namely, a thickness direction z.

The camera module 101 may further include an image processor, a memory (not shown in the figure), and the like. The image sensor 20 may transmit a converted electrical signal to the image processor, the memory, and the like for processing, and then transmit a processed electrical signal to the electronic device, so that an image of a to-be-shot object is displayed on a display of the electronic device.

Certainly, in some other examples, the camera module 101 may further include other mechanical parts, for example, a detection sensor, a drive structure, and a circuit board.

Still refer to FIG. 2. The camera lens component 10 may include at least a first lens element unit 110 and a second lens element unit 120 that are sequentially arranged from an object side to an image side along the optical axis L, and the first lens element unit 110 and the second lens element unit 120 each include a lens element with focal power.

The camera lens component 10 may further include a lens barrel (not shown in the figure). The lens barrel may be used as a main bearing mechanical part of the camera lens component 10. The first lens element unit 110 and the second lens element unit 120 may be disposed in the lens barrel, and an optical axis of the camera lens component 10 may coincide with a central axis of the lens barrel. Light transmission holes may be disposed at two opposite ends of the lens barrel along the optical axis, so that light can enter the lens barrel and pass through the camera lens component 10, and light passing through the camera lens component 10 can also be emitted to be irradiated onto the image sensor 20.

The camera lens component 10 may further include an aperture 130. The aperture 130 may be located on a side that is of the first lens element unit 110 and that faces the object side. In other words, compared with the first lens element unit 110 and the second lens element unit 120, the aperture 130 may be disposed closer to the object side. The aperture 130 may be fastened in the lens barrel. For example, the aperture 130 may be fastened on a lens element (for example, a first lens element 11) that is in the first lens element unit 110 and that is disposed closest to the object side.

Certainly, in some other examples, the aperture 130 may alternatively be fastened outside the lens barrel. Light may first pass through the aperture 130, then sequentially pass through the first lens element unit 110 and the second lens element unit 120, and then is emitted. The aperture 130 may limit light entering the camera lens component 10, to adjust intensity of the light, and may be configured to control an amount of admitted light of the camera lens component 10.

The aperture 130 may be a variable aperture whose opening can be adjusted, to improve controllability and flexibility of adjusting an amount of admitted light of the aperture 130, so that the camera lens component 10 can provide different depth of field ranges for different image shooting scenes. This meets image shooting requirements of a plurality of scenes.

Certainly, in some other examples, the aperture 130 may alternatively be an aperture with a fixed opening. This helps simplify a structure design difficulty of the camera lens component 10 while ensuring an amount of admitted light.

There may be a plurality of lens elements in the first lens element unit 110, the plurality of lens elements may be sequentially arranged from the object side to the image side along the optical axis, and centers of the plurality of lens elements may be overlapped and located on the optical axis. For example, as shown in FIG. 2, the first lens element unit 110 may include five lens elements with focal power, for example, a first lens element 11, a second lens element 12, a third lens element 13, a fourth lens element 14, and a fifth lens element 15. The first lens element 11, the second lens element 12, the third lens element 13, the fourth lens element 14, and the fifth lens element 15 are sequentially arranged from the object side to the image side along the optical axis L. In other words, the first lens element 11 is a lens element that has focal power and that is disposed closest to the object side in the first lens element unit 110, and the fifth lens element 15 is a lens element that has focal power and that is disposed closest to the image side (the second lens element unit 120) in the first lens element unit 110.

Alternatively, there may be a plurality of lens elements in the second lens element unit 120, the plurality of lens elements may be sequentially arranged from the object side to the image side along the optical axis, and centers of the plurality of lens elements may be overlapped and located on the optical axis. For example, as shown in FIG. 2, the second lens element unit 120 may include two lens elements with focal power, for example, a sixth lens element 16 and a seventh lens element 17. The sixth lens element 16 and the seventh lens element 17 are sequentially arranged from the object side to the image side along the optical axis L. In other words, the sixth lens element 16 is a lens element that has focal power and that is disposed closest to the object side (the first lens element unit 110) in the second lens element unit 120, and the seventh lens element 17 is a lens element that has focal power and that is disposed closest to the image side in the second lens element unit 120.

Certainly, in some other examples, there may alternatively be one lens element in the second lens element unit 120. For example, the second lens element unit 120 may include only the sixth lens element 16.

The foregoing two-lens element unit architecture forms the camera lens component 10. A quantity of lens elements, an optical parameter of each lens element, an architecture layout, and the like are appropriately allocated, so that a wide aperture and a large target surface of the camera lens component 10 can be designed, the camera lens component 10 has good optical quality, and imaging quality and imaging effect are significantly improved.

For example, in this embodiment of this application, an example in which the first lens element unit 110 includes five lens elements with focal power and the second lens element unit 120 includes two lens elements with focal power is used for description.

The camera lens component 10 may include a working state and a non-working state. For example, when the camera module 101 is used to implement image shooting, and the camera lens component 10 needs to be used to implement imaging, the camera lens component 10 is in a working state. When the camera module 101 does not implement image shooting and does not need to implement imaging by using the camera lens component 10, the camera lens component 10 is in a non-working state.

In a possible example, a mobile phone is used as an example, the mobile phone may include the camera module 101, and the mobile phone may implement image shooting functions of a wide aperture and a large target surface by using the camera module 101. When the user enables an image shooting function of the mobile phone (for example, starts a camera application on a display page of the mobile phone by tapping), the camera lens component 10 switches to a working state. When the camera lens component 10 is in the working state, the camera lens component 10 may be used for imaging, so that the camera module 101 can implement the image shooting function. When the user disables or exits the image shooting function of the mobile phone (for example, stops or exits a camera), the camera lens component 10 switches to a non-working state. When the camera lens component 10 is in the non-working state, the camera lens component 10 is not used for imaging, and the camera module 101 does not implement the image shooting function.

Alternatively, in another possible example, the mobile phone may include the camera module 101, and the mobile phone may further include another camera module, to implement another image shooting function (for example, a telephoto function). This enriches the image shooting function of the mobile phone. When the user enables an image shooting function of the mobile phone (for example, starts a camera by tapping), and switches to a wide aperture and large target surface image shooting mode, the camera lens component 10 switches to a working state. When the camera lens component 10 is in the working state, the camera lens component 10 may be used for imaging, so that the camera module 101 implements an image shooting function. When the user closes or exits a wide aperture and large target surface mode, and switches to another camera module to implement another image shooting function, or disables or exits an image shooting function (for example, stops or exits a camera), the camera lens component 10 switches to a non-working state, the camera lens component 10 is not used for imaging, and the camera module 101 does not implement an image shooting function.

All lens elements of the first lens element unit 110 may be fastened to the lens barrel in a movable manner, the second lens element unit 120 may be fastened and assembled on the lens barrel, and all the lens elements of the first lens element unit 110 may move relative to the lens barrel (the housing of the electronic device), the second lens element unit 120, the image sensor 20, and the like. The camera lens component 10 may be switched between the working state and the non-working state by moving all the lens elements in the first lens element unit 110.

Specifically, as shown in FIG. 2, when the camera lens component 10 is in the working state, there is a specific spacing between the first lens element unit 110 and the second lens element unit 120 on the optical axis, the spacing is an air gap between the first lens element unit 110 and the second lens element unit 120 on the optical axis. For example, when there are a plurality of lens elements in the second lens element unit 120, the spacing is a distance on the optical axis between an image-side surface of a lens element that is in the first lens element unit 110 and that is closest to the image side and an object-side surface of a lens element that is in the second lens element unit 120 and that is closest to the object side, for example, as shown in FIG. 2, a spacing GD on the optical axis between the fifth lens element 15 of the first lens element unit 110 and the sixth lens element 16 of the second lens element unit 120. A length and a total track length of the camera lens component 10 are long, so that when the camera lens component 10 is in the working state, it is convenient to implement a feature of both a wide aperture and a large target surface, and it is convenient to implement a telephoto function of the camera lens component 10. In this case, a length of the entire camera module 101 along the optical axis is long, and a thickness of the camera module 101 is large.

It may be understood that, when the second lens element unit 120 has one lens element, for example, includes only the sixth lens element, the spacing is a distance on the optical axis between an image-side surface of a lens element that is in the first lens element unit 110 and that is closest to the image side (for example, the fifth lens element 15) and an object-side surface of the sixth lens element in the second lens element unit 120.

Specifically, when the camera lens component 10 is in a working state, a half of image height of the camera lens component 10 is IMH, an f-number of the camera lens component 10 is F#, and a ratio of the half of image height IMH of the camera lens component 10 to the f-number F# of the camera lens component 10 may satisfy the following: IMH/F#>4.0, so that the camera lens component 10 has a large half of image height and a small f-number. In this way, when the camera lens component 10 is in a working state, the camera lens component 10 can have a feature of both a wide aperture and a large target surface, and has high imaging quality, so that high-quality imaging of the camera lens component 10 with both the large target surface and the wide aperture is implemented.

When the camera lens component 10 switches from a working state to a non-working state, all lens elements of the first lens element unit 110 may move toward the second lens element unit 120 along the optical axis. In other words, the first lens element 11, the second lens element 12, the third lens element 13, the fourth lens element 14, and the fifth lens element 15 in the first lens element unit 110 move toward the second lens element unit 120 along the optical axis L. A spacing GD between the first lens element unit 110 and the second lens element unit 120 is compressed, to reduce a distance between the first lens element unit 110 and the second lens element unit 120, and shorten a length and a total track length of the camera lens component 10. In this way, an overall length of the camera module 101 on the optical axis (namely, a thickness of the camera module 101) is reduced.

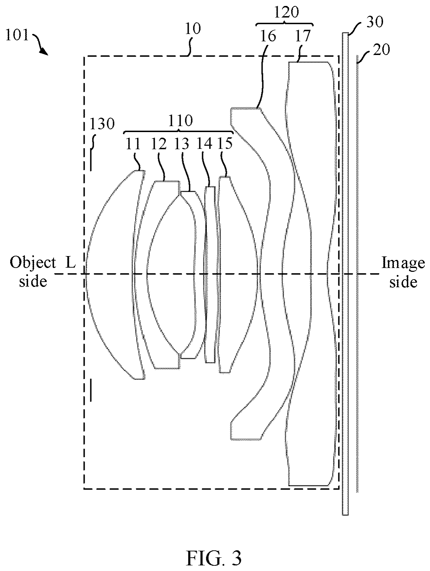

FIG. 3 is a diagram of a structure of a camera lens component in a camera module in a non-working state according to an embodiment of this application.

When the camera lens component 10 is in a non-working state, as shown in FIG. 3, the first lens element unit 110 is disposed adjacent to the second lens element unit 120, a spacing between the first lens element unit 110 and the second lens element unit 120 may be very small, and the camera lens component 10 has a small length size and a small total track length. This significantly reduces a thickness of the camera module 101.

In other words, in this embodiment of this application, when the camera lens component 10 is in a working state, the spacing between the first lens element unit 110 and the second lens element unit 120 may be increased, that is, the total track length of the camera lens component 10 in the working state is increased. In this way, the camera lens component 10 can have a large half of image height and a small f-number, so that the camera lens component 10 has a feature of both a wide aperture and a large target surface, imaging quality and imaging effect are improved, and a telephoto function can be easily implemented. When the camera lens component 10 is in the non-working state, the spacing between the first lens element unit 110 and the second lens element unit 120 is compressed, so that the length and the total track length of the camera lens component 10 are compressed, and thicknesses of the camera lens component 10 and the camera module 101 are reduced. In this way, a thinning design requirement of the electronic device is met. In other words, the camera lens component 10 can ensure miniaturization and thinning in the non-working state, and can also ensure functional features of a wide aperture, a large target surface, and telephoto in the working state, to ensure imaging quality. In this way, the wide aperture, the large target surface, and a telephoto function of the camera module 101 are implemented while a thinning requirement of the electronic device can be met. In addition, one camera module 101 can maintain high image shooting quality while ensuring performance of a primary camera module and a long-focus module, to optimize a spatial layout of the electronic device, reduce costs of the camera module of the electronic device, and improve performance and experience of the electronic device.

When the camera lens component 10 is in the working state, the total track length of the camera lens component 10 is TTL, and a range of a ratio of a spacing GD between the first lens element unit 110 and the second lens element unit 120 on the optical axis to the total track length TTL of the camera lens component 10 may be 0.2<GD/TTL<0.5. When the total track length is fixed, there is a large spacing GD between the first lens element unit 110 and the second lens element unit 120, to facilitate implementation of an optical path, so as to ensure that the camera lens component 10 can implement high-quality imaging with a wide aperture and a large target surface design when the camera lens component 10 is in the working state.

In addition, there is a large spacing GD between the first lens element unit 110 and the second lens element unit 120. When the camera lens component 10 is switched to the non-working state by moving the first lens element unit 110, the compressed spacing may enable the camera lens component 10 to have a smaller length and a smaller total track length in the non-working state. This significantly compresses length sizes of the camera lens component 10 and the camera module 101 in the non-working state, and significantly reduces a thickness of the camera module 101 in the non-working state. In this way, an ultra-thin camera module 101 in the non-working state is obtained. This is more conducive to meeting a thinning requirement of the electronic device.

In addition, to meet a requirement like focusing of the camera module 101 in an image shooting process, for example, auto focus (auto focus, AF for short) or zoom, when the camera lens component 10 is in the working state, all lens elements in the first lens element unit 110 or at least one lens element that is in the first lens element unit 110 and that is close to the image side (the second lens element unit 120) may move along the optical axis, for example, all or some of the lens elements may move toward or away from the image sensor 20 along the optical axis, to change distances between all or some of the moving lens elements and the image sensor 20, and adjust a focal length of the camera lens component 10. For example, a function like auto focus or zoom of the camera lens component 10 is implemented, to achieve better image shooting effect.

For example, as shown in FIG. 2, an example in which all lens elements of the first lens element unit 110 are movable is used, in other words, the first lens element 11, the second lens element 12, the third lens element 13, the fourth lens element 14, and the fifth lens element 15 may move toward or away from the image sensor 20 along the optical axis, to change the focal length of the camera lens component 10, and implement a function like focusing or zooming.

Certainly, in some other examples, at least one lens element that is in the first lens element unit 110 and that is close to the second lens element unit 120 may be disposed in a movable manner. For example, three lens elements that are in the first lens element unit 110 and that are disposed close to the second lens element unit 120, for example, the third lens element 13, the fourth lens element 14, and the fifth lens element 15, may move toward or away from the image sensor 20 along the optical axis. This can also implement an operation like focusing or zooming.

Therefore, there is a large spacing GD between the first lens element unit 110 and the second lens element unit 120, a range of moving of all or some lens elements of the first lens element unit 110 that are close to the image side can be further expanded, and operation flexibility of focusing, zooming, or the like can be improved. This better facilitates implementation of a function like focusing or zooming, and further improves imaging quality and imaging effect.

It should be noted that, when the camera lens component 10 is in the working state, there is a large spacing between the first lens element unit 110 and the second lens element unit 120, and the length and the total track length of the camera lens component 10 are long. Therefore, in the electronic device, when the camera lens component 10 is in the working state, at least a part of the first lens element unit 110 may be located outside the housing of the electronic device, to release a freedom degree of the total track length required by the camera lens component 10 in the working state, and implement high-quality imaging with a wide aperture and a large target surface. In addition, impact of the total track length and the length of the camera lens component 10 on the thickness of the electronic device can be reduced. This facilitates a thinning design of the electronic device while ensuring optical performance.

It should be noted that, when the camera lens component 10 is in the working state, all lens elements of the first lens element unit 110 may be located outside the housing, or some lens elements that are of the first lens element unit 110 and that are close to the object side may be located outside the housing.

When the camera lens component 10 switches from the working state to the non-working state, for example, when the image shooting function is disabled or exited, or the camera lens component 10 switches to another camera module to implement image shooting, the first lens element unit 110 may move toward the second lens element unit 120 along the optical axis, that is, move toward the inside of the housing, and a spacing between the first lens element unit 110 and the second lens element unit 120 is compressed, to significantly reduce a thickness of the camera module 101 in the non-working state. The ultra-thin camera module 101 occupies small space in the electronic device. When the camera lens component 10 is in the non-working state, even if the entire camera module 101 is placed in the electronic device, a thickness design of the electronic device is not greatly restricted. This facilitates thinning of the electronic device.

It should be noted that, when the camera lens component 10 is in the non-working state, the first lens element unit 110 may move into the accommodating cavity in the housing, so that the first lens element unit 110 is entirely located in the accommodating cavity. In other words, the entire camera module 101 may be located inside the housing of the electronic device. Alternatively, the first lens element unit 110 may be partially located in the housing, and partially protrude to the outside of the housing. For example, some lens elements of the first lens element unit 110 that are close to the object side may be located outside the housing. This helps further reduce a thickness of the electronic device while good aesthetics is ensured.

On the contrary, when the camera lens component 10 is switched from the non-working state to the working state, for example, when the image shooting function is enabled, or when the image shooting function is enabled and the camera lens component 10 is switched to a wide aperture and large target surface image shooting mode, the first lens element unit 110 may move along the optical axis in a direction away from the second lens element unit 120, that is, the first lens element unit 110 moves toward the outside of the housing, to restore the spacing between the first lens element unit 110 and the second lens element unit 120, and restore the total track length of the camera lens component 10. In addition, when the camera lens component 10 is in the working state, at least a part of the first lens element unit 110 is ejected out of the housing.

To implement movement of the first lens element unit 110 along the optical axis, a light inlet hole may be disposed on the housing (or a display) of the electronic device, and the light inlet hole may be communicated with the accommodating cavity in the housing. The first lens element unit 110 may move toward the outside of the housing or the inside of the housing through the light inlet hole.

In some examples, to ensure sealing performance of the accommodating cavity inside the electronic device, a cover plate may be disposed on the light inlet hole. To meet a movement requirement of the first lens element unit 110, the cover plate may also be movably disposed. For example, the cover plate can also move along the optical axis.

When the camera lens component 10 switches from a non-working state to a working state, the cover plate may first move toward the outside of the housing in a direction of the optical axis, to be ejected out of the housing to form avoidance space. The first lens element unit 110 may move in the avoidance space, for example, move toward the outside of the housing. In this way, at least a part of the first lens element unit 110 is also ejected out of the housing, and a length and a total track length of the camera lens component 10 are restored, to ensure high-quality imaging of a wide aperture and a large target surface of the camera lens component 10.

On the contrary, when the camera lens component 10 switches from a working state to a non-working state, the first lens element unit 110 may retract toward the housing along the optical axis, to compress a spacing between the first lens element unit 110 and the second lens element unit 120, and the cover plate may also retract toward the housing along the optical axis, to make the cover plate cover on the light inlet hole.

The camera module 101 may further include a lens element drive structure. For example, the lens element drive structure may be a drive chip, a drive motor, or the like. The lens element drive structure may be connected to the first lens element unit 110, and the lens element drive structure may drive the lens element of the first lens element unit 110 to move along the optical axis, to implement switching between a working state and a non-working state of the camera lens component 10, and operations such as zooming and focusing of the camera module 101.

It should be noted that, in this embodiment of this application, a specific movement manner of all the lens elements in the first lens element unit 110 is not limited. For example, all lens elements of the first lens element unit 110 may be used as a whole, and the lens element drive structure may drive the first lens element unit 110 to move together along the optical axis.

Alternatively, there may be a plurality of lens element drive structures, the plurality of lens element drive structures may respectively cooperate with some lens elements in the first lens element unit 110, and the plurality of lens element drive structures may respectively drive corresponding lens elements to move along the optical axis, so that all lens elements of the first lens element unit 110 move along the optical axis.

The following further describes in detail optical performance of the camera lens component 10 when the camera lens component 10 is in a working state.

When the camera lens component 10 is in a working state, an f-number F# of the camera lens component 10 may satisfy the following: $1.1 < F\# < 2$, and the f-number is small. This ensures that the camera lens component 10 has a wide aperture feature, and significantly improves imaging quality and imaging effect.

When the camera lens component 10 is in a working state, a focal length of the camera lens component 10 is EFL, a ratio of a spacing GD between the first lens element unit 110 and the second lens element unit 120 on the optical axis to the focal length EFL of the camera lens component 10 may satisfy the following: $0.20 < GD/EFL < 0.60$, the camera lens component 10 has a long focal length and a large long spacing GD. This helps further implement high-quality imaging in a design of a large target surface of the camera lens component 10, enables a large spacing between the first lens element unit 110 and the second lens element unit 120, and further helps implement significant thinning of the camera lens component 10 in a non-working state.

When the camera lens component 10 is in a working state, a ratio of the focal length EFL of the camera lens component 10 to the total track length TTL of the camera lens component 10 may satisfy the following: $0.6 < EFL/TTL < 0.9$. In the working state, the total track length of the camera lens component 10 is large. In this way, both the focal length and the total track length of the camera lens component 10 are large, so that the camera lens component 10 implements features of a wide aperture, a large target surface, and telephoto. This helps further improve imaging quality and imaging effect.

When the camera lens component 10 is in a working state, a focal length of the first lens element unit 110 is EFL1. A ratio of the focal length EFL1 of the first lens element unit 110 to the focal length EFL of the camera lens component 10 may satisfy the following: $0.9 < EFL1/EFL < 1.1$, so that focal power of the first lens element unit 110 is appropriately allocated. In this way, the first lens element unit 110 has a large refraction capability, to ensure imaging quality and imaging effect of the camera lens component 10.

When the camera lens component 10 is in a working state, a ratio of a half of image height IMH of the camera lens component 10 to the total track length TTL of the camera lens component 10 may satisfy the following: $IMH/TTL < 0.7$, so that the half of image height and the total track length of the camera lens component 10 are large. This further ensures that the camera lens component 10 has a feature of a large target surface, and also helps the camera lens component 10 implement a telephoto function.

A half field of view of the camera lens component 10 is HFOV, and the focal length EFL of the camera lens component 10 and the half field of view of the camera lens component 10 may satisfy the following: $EFL*\tan(HFOV) \geq 8.00$ mm, to ensure that the camera lens component 10 has a large imaging range. In this way, imaging of the camera lens component 10 has a larger image height. This further ensures that the camera lens component 10 can implement a large target surface design, and improves imaging quality and imaging effect of the camera lens component 10.

It should be noted that, when the camera lens component 10 is in a working state, all or some lens elements of the first lens element unit 110 that are close to the image side may be moved to implement focusing, zooming, or the like of the camera lens component 10. When the camera lens component 10 is moved to implement an operation like focusing or zooming, and when all or some of the lens elements of the first lens element unit 110 move to any position, imaging-related optical parameters such as the total track length TTL of the camera lens component 10, the focal length EFL of the camera lens component 10, the half of image height IMH of the camera lens component 10, the f-number of the camera lens component 10, and the half field of view of the camera lens component 10 may satisfy the foregoing conditional expression and range.

In this embodiment of this application, both the first lens element unit 110 and the second lens element unit 120 include lens elements with focal power, and a quantity of lens elements in the first lens element unit 110 may be greater than or equal to 4. A quantity of lens elements in the first lens element unit 110 is appropriately allocated, to ensure a light refraction capability of the first lens element unit 110. This helps implement a wide aperture and large target surface design of the camera lens component 10, and ensures imaging quality and imaging effect.

A quantity of lens elements in the second lens element unit 120 may be less than or equal to 3. This helps reduce a length and a total track length of the camera lens component 10 while ensuring imaging quality and imaging effect of the camera lens component 10, and further helps implement thinning of the camera lens component 10 and the camera module 101. In addition, architecture design complexity and costs of the camera lens component 10 can also be reduced, to facilitate implementation.

In an example, as shown in FIG. 2 and FIG. 3, the first lens element unit 110 may include five lens elements with focal power, for example, a first lens element 11, a second lens element 12, a third lens element 13, a fourth lens element 14, and a fifth lens element 15. The second lens element unit 120 may include two lens elements with focal power, for example, a sixth lens element 16 and a seventh lens element 17. In other words, the camera lens component 10 is a seven-lens element architecture, including seven lens elements with focal power. The architecture is simple, to help reduce a size and costs under a condition of ensuring that the camera lens component 10 can implement high-quality imaging with a wide aperture and large target surface design.

Certainly, in some other examples, the quantity of lens elements in the first lens element unit 110 and the quantity of lens elements in the second lens element unit 120 may alternatively be another value, so that the camera lens component 10 may further include another lens element arrangement and combination manner. This is not limited to the foregoing implementations, and only the foregoing implementation is used for description.

In this embodiment of this application, focal power of each lens element having focal power in the camera lens component 10 is not limited, and may be selected and set based on an actual image shooting requirement.

For example, in the camera lens component 10 with the seven-lens element architecture, the first lens element 11 may have positive focal power, the second lens element 12 may have negative focal power, the fourth lens element 14 may have negative focal power, the fifth lens element 15 may have positive focal power, the sixth lens element 16 may have positive focal power, and the seventh lens element 17 may have negative focal power, so that focal power of each lens element is appropriately allocated. This helps implement a wide aperture and large target surface design when the camera lens component 10 is in a working state.

Shapes of a plurality of lens elements in the camera lens component 10 may be the same, or shapes of a plurality of lens elements may be different. A specific lens element shape may be selected and set based on a design requirement. For example, a shape of the lens element may be a circle, an ellipse, or another regular or irregular pattern.

For example, in the camera lens component 10, a lens element disposed closest to the image side is the seventh lens element 17, and a lens element disposed next to the seventh lens element 17 is the sixth lens element 16. Light is emitted through the sixth lens element 16 and the seventh lens element 17 and is irradiated onto the image sensor 20. At least one of an object-side surface and an image-side surface of the sixth lens element 16 may be a toric surface, and at least one of an object-side surface and an image-side surface of the seventh lens element 17 may be a toric surface. The toric surface means a curved surface on two cross-sectional circles perpendicular to each other, and there are at least two different curvature radius values. For example, as shown in FIG. 3, an image-side surface of the sixth lens element 16 is an M-shaped curved surface. An incident angle of light on the image sensor 20 can be adjusted, to further facilitate implementation of a large target surface design. In addition, sensitivity of the second lens element unit 120 is improved, to further improve imaging quality and imaging effect of the camera lens component 10.

Each lens element in the first lens element unit 110 and the second lens element unit 120 may be an aspheric lens element. For example, each lens element may be an aspheric lens, the aspheric lens element can reduce or eliminate a spherical aberration and a distorted aberration that are introduced by a spherical lens element. This can further help implement wide-aperture performance of the camera lens component 10, and also help reduce a total track length of the camera lens component 10.

The following describes, with reference to specific embodiments, architectures and performance of the camera lens component 10 and the camera module 101 provided in this application.

Embodiment 1

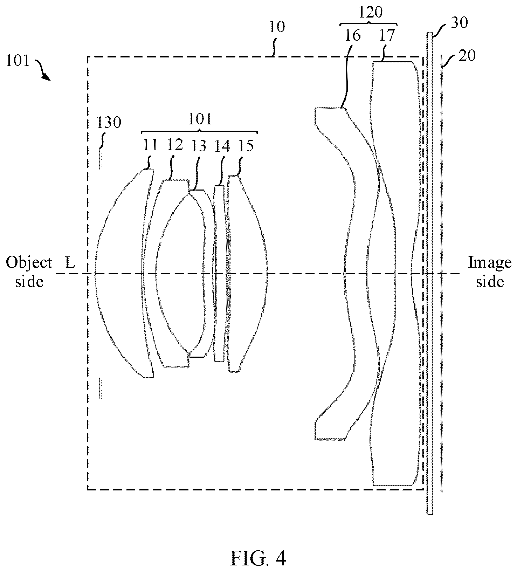

FIG. 4 is a diagram of a simulation structure when a camera lens component in a camera module is in a working state according to Embodiment 1 of this application.

In this embodiment, as shown in FIG. 4, the camera lens component 10 includes seven lens elements with focal power, and the first lens element unit 110 includes five lens elements with focal power, for example, a first lens element 11, a second lens element 12, a third lens element 13, a fourth lens element 14, and a fifth lens element 15. The second lens element unit 120 includes two lens elements with focal power, for example, a sixth lens element 16 and a seventh lens element 17. The first lens element 11, the second lens element 12, the third lens element 13, the fourth lens element 14, the fifth lens element 15, the sixth lens element 16, and the seventh lens element 17 are sequentially arranged along an optical axis L from an object side to an image side.

In other words, in the camera module 101, from the object side to the image side along a direction of the optical axis L, an aperture 130, the first lens element 11, the second lens element 12, the third lens element 13, the fourth lens element 14, the fifth lens element 15, the sixth lens element 16, the seventh lens element 17, a light filter 30, and an image sensor 20 are sequentially arranged. Light entering the camera module 101 sequentially passes through the camera lens component 10 and the light filter 30 in the foregoing sequence and is irradiated onto the image sensor 20, and is finally imaged on a photosensitive surface of the image sensor 20.

The first lens element 11 may have positive focal power, at least a part that is of an object-side surface of the first lens element 11 and that corresponds to the optical axis may be a convex surface, and at least a part that is of an image-side surface of the first lens element 11 and that corresponds to the optical axis may be a concave surface.

The second lens element 12 may have negative focal power, at least a part that is of an object-side surface of the second lens element 12 and that corresponds to the optical axis may be a convex surface, and at least a part that is of an image-side surface of the second lens element 12 and that corresponds to the optical axis may be a concave surface.

The third lens element 13 may have negative focal power, at least a part that is of an object-side surface of the third lens element 13 and that corresponds to the optical axis may be a convex surface, and at least a part that is of an image-side surface of the third lens element 13 and that corresponds to the optical axis may be a concave surface.

The fourth lens element 14 may have negative focal power, at least a part that is of an object-side surface of the fourth lens element 14 and that corresponds to the optical axis may be a convex surface, and at least a part that is of an image-side surface of the fourth lens element 14 and that corresponds to the optical axis is a concave surface.

The fifth lens element 15 may have positive focal power, at least a part that is of an object-side surface of the fifth lens element 15 and that corresponds to the optical axis may be a convex surface, and at least a part that is of an image-side surface of the fifth lens element 15 and that corresponds to the optical axis may be a convex surface.

The sixth lens element 16 may have positive focal power, at least a part that is of an object-side surface of the sixth lens element 16 and that corresponds to the optical axis may be a convex surface, and at least a part that is of an image-side surface of the sixth lens element 16 and that corresponds to the optical axis may be a concave surface. At least one of the object-side surface and the image-side surface of the sixth lens element 16 is a toric surface.

The seventh lens element 17 may have negative focal power, at least a part that is of an object-side surface of the seventh lens element 17 and that corresponds to the optical axis may be a convex surface, and at least a part that is of an image-side surface of the seventh lens element 17 and that corresponds to the optical axis may be a concave surface. At least one of the object-side surface and the image-side surface of the seventh lens element 17 is a toric surface.

When the camera lens component 10 is in a working state, as shown in FIG. 4, there is a large spacing on an optical axis between the object-side surface of the fifth lens element 15 in the first lens element unit 110 and the image-side surface of the sixth lens element 16 in the second lens element unit 120, and the camera lens component 10 can implement high-quality imaging with a wide aperture and a large target surface. When the camera lens component 10 switches from a working state to a non-working state, all lens elements of the first lens element unit 110 may move toward the second lens element unit 120 along the optical axis, to compress a spacing between the first lens element unit 110 and the second lens element unit 120, and reduce lengths of the camera lens component 10 and the camera module 101.

The following describes optical parameters and performance of the camera lens component 10 and each lens element when the camera lens component 10 is in a working state.

A half of image height IMH of the camera lens component 10 is equal to 8.2 mm, an f-number F# of the camera lens component 10 is equal to 1.277, and a ratio IMH/F# of the half of image height IMH of the camera lens component 10 to the f-number F# of the camera lens component 10 is equal to 6.421 mm.

A spacing GD between the first lens element unit 110 and the second lens element unit 120 on an axis is equal to 2.88 mm, and a total track length TTL of the camera lens component 10 is equal to 12.88 mm, a ratio of the spacing GD between the first lens element unit 110 and the second lens element unit 120 on the optical axis to the total track length TTL of the camera lens component 10 is GD/TTL=0.224.

A focal length EFL of the camera lens component 10 is 10.0 mm, and a ratio of the spacing GD between the first lens element unit 110 and the second lens element unit 120 on the optical axis to the focal length EFL of the camera lens component 10 is GD/EFL=0.288.

A ratio of a focal length EFL 1 of the first lens element unit 110 to the focal length EFL of the camera lens component 10 is EFL 1/EFL=0.996.

A ratio of a half of image height IMH of the camera lens component 10 to the total track length TTL of the camera lens component 10 is IMH/TTL=0.637.

A ratio of the focal length EFL of the camera lens component 10 to the total track length TTL of the camera lens component 10 is EFL/TTL=0.78.

A half field of view HFOV of the camera lens component 10 is equal to 40°, and the focal length EFL of the camera lens component 10 and a maximum half field of view HFOV of the camera lens component 10 satisfy the following: EFL*tan(HFOV)=8.391 mm.

Table 1.1 shows an optical parameter of each lens element in a camera module according to Embodiment 1 of this application.

| Lens element | Surface number | Curvature radius | Thickness | Focal length | Refractive index | Abbe coefficient |
|---|---|---|---|---|---|---|
| | Object surface | Unlimited | Unlimited | - | - | - |
| | Aperture | Unlimited | -0.18 | - | - | - |
| L1 | S1 | 5.25 | 1.72 | 9.35E+00 | 1.74E+00 | 4.92E+01 |
| | S2 | 18.28 | 0.08 | | | |
| L2 | S3 | 6.81 | 0.46 | - 1.55E+01 | 1.68E+00 | 1.92E+01 |
| | S4 | 4.02 | 1.76 | | | |
| L3 | S5 | 13.43 | 0.35 | - 2.45E+02 | 1.68E+00 | 1.92E+01 |
| | S6 | 12.30 | 0.11 | | | |
| L4 | S7 | 45.20 | 0.40 | - 2.10E+01 | 1.64E+00 | 2.40E+01 |
| | S8 | 10.33 | 0.11 | | | |
| L5 | S9 | 14.82 | 1.40 | 8.36E+00 | 1.55E+00 | 5.61E+01 |
| | S10 | -6.37 | 2.88 | | | |
| L6 | S11 | 7.27 | 0.82 | 1.52E+02 | 1.68E+00 | 1.92E+01 |
| | S12 | 7.47 | 1.04 | | | |
| L7 | S13 | 12.23 | 0.62 | - 1.19E+01 | 1.55E+00 | 5.61E+01 |
| | S14 | 4.18 | 0.59 | | | |
| IR | S15 | Unlimited | 0.21 | - | 1.52 | 64.17 |
| | S16 | Unlimited | 0.332972881 | | | |
| | Image surface | Unlimited | 0 | - | - | - |

L1 represents the first lens element 11. L2 represents the second lens element 12. L3 represents the third lens element 13. L4 represents the fourth lens element 14. L5 represents the fifth lens element 15. L6 represents the sixth lens element 16. L7 represents the seventh lens element 17. IR represents the light filter 30.

S1 and S2 are respectively an object-side surface and an image-side surface of the first lens element 11, S3 and S4 are respectively an object-side surface and an image-side surface of the second lens element 12, S5 and S6 are respectively an object-side surface and an image-side surface of the third lens element 13, S7 and S8 are respectively an object-side surface and an image-side surface of the fourth lens element 14, S9 and S10 are respectively an object-side surface and an image-side surface of the fifth lens element 15, S11 and S12 are respectively an object-side surface and an image-side surface of the sixth lens element 16, S13 and S14 are respectively an object-side surface and an image-side surface of the seventh lens element 17, and S15 and S16 are respectively an object-side surface and an image-side surface of the light filter 30.

The thickness is a distance between adjacent surfaces, and is a distance between a mirror surface and an adjacent next mirror surface on an optical axis in a direction from an object side to an image side. For example, a thickness corresponding to a row in which an aperture is located is a distance on the optical axis from the aperture 130 to the object-side surface of the first lens element 11, and a thickness corresponding to a row in which the object-side surface S1 of the first lens element 11 is located is a distance on the optical axis from the object-side surface to the image-side surface of the first lens element 11, namely, a thickness of the first lens element 11 on the optical axis. A thickness corresponding to a row in which the image-side surface S2 of the first lens element 11 is located is a distance on the optical axis from the image-side surface of the first lens element 11 to the object-side surface of the second lens element 12, and so on.

Table 1.2 shows an aspherical coefficient of each lens element in a camera lens component according to Embodiment 1 of this application.

| | | Conic coefficient K | A2 | A4 | A6 | A8 | A10 | A12 | A14 |
|---|---|---|---|---|---|---|---|---|---|
| L1 | S1 | 0.00E+00 | 0.00E+ 00 | 9.15E-05 | 7.07E-06 | 1.41E-05 | -9.23E-06 | 2.75E-06 | -4.67E-07 |
| | S2 | 0.00E+00 | 0.00E+ 00 | -1.72E-03 | 1.33E-03 | -4.94E-04 | 1.24E-04 | -2.20E-05 | 2.69E-06 |
| L2 | S3 | 0.00E+00 | 0.00E+ 00 | -7.53E-03 | 2.91E-03 | -1.24E-03 | 5.44E-04 | -2.14E-04 | 6.66E-05 |
| | S4 | 0.00E+00 | 0.00E+ 00 | -5.91E-03 | 1.61E-03 | -9.96E-04 | 8.84E-04 | -5.95E-04 | 2.76E-04 |
| L3 | S5 | 0.00E+00 | 0.00E+ 00 | -3.00E-03 | 7.99E-04 | -4.87E-03 | 5.02E-03 | -3.10E-03 | 1.29E-03 |
| | S6 | 0.00E+00 | 0.00E+ 00 | 5.35E-03 | -8.21E-03 | 6.74E-03 | -5.64E-03 | 3.41E-03 | -1.43E-03 |
| L4 | S7 | 0.00E+00 | 0.00E+ 00 | -8.10E-03 | 1.10E-03 | 3.26E-03 | -4.95E-03 | 3.49E-03 | -1.49E-03 |
| | S8 | 0.00E+00 | 0.00E+ 00 | -3.20E-02 | 9.81E-03 | -5.18E-04 | -2.85E-03 | 2.26E-03 | -9.14E-04 |
| L5 | S9 | 0.00E+00 | 0.00E+ 00 | -2.20E-02 | 5.16E-03 | 1.15E-03 | -2.87E-03 | 1.91E-03 | -7.17E-04 |
| | S10 | 0.00E+00 | 0.00E+ 00 | -2.35E-03 | 1.69E-03 | -1.89E-03 | 1.34E-03 | -6.21E-04 | 1.98E-04 |
| L6 | S11 | 5.12E-03 | 0.00E+ 00 | -5.04E-03 | 1.88E-03 | -7.38E-04 | 1.67E-04 | -2.51E-05 | 2.58E-06 |
| | S12 | 9.19E-04 | 0.00E+ 00 | -4.63E-03 | 2.09E-03 | -7.60E-04 | 1.58E-04 | -2.22E-05 | 2.19E-06 |
| L7 | S13 | -2.23E-01 | 0.00E+ 00 | -2.09E-02 | 3.57E-03 | -5.02E-04 | 5.23E-05 | -3.91E-06 | 2.13E-07 |
| | S14 | -2.87E+00 | 0.00E+ 00 | -1.91E-02 | 3.32E-03 | -4.32E-04 | 3.96E-05 | -2.53E-06 | 1.15E-07 |
| | | A16 | A18 | A20 | A22 | A24 | A26 | 28 | 30 |
| L1 | S1 | 4.82E-08 | -2.99E-09 | 1.03E-10 | -1.52E-12 | 0.00E+00 | 0.00E+ 00 | 0.00E+00 | 0.00E+00 |
| | S2 | -2.22E-07 | 1.17E-08 | -3.57E-10 | 4.73E-12 | 0.00E+00 | 0.00E+ 00 | 0.00E+00 | 0.00E+00 |
| L2 | S3 | -1.55E-05 | 2.66E-06 | -3.33E-07 | 2.98E-08 | -1.87E-09 | 7.73E-11 | -1.91E-12 | 2.12E-14 |
| | S4 | -8.96E-05 | 2.07E-05 | -3.41E-06 | 3.99E-07 | -3.25E-08 | 1.74E-09 | -5.54E-11 | 7.92E-13 |
| L3 | S5 | -3.81E-04 | 8.09E-05 | -1.25E-05 | 1.38E-06 | -1.06E-07 | 5.43E-09 | -1.64E-10 | 2.23E-12 |
| | S6 | 4.18E-04 | -8.68E-05 | 1.29E-05 | -1.36E-06 | 9.93E-08 | -4.78E-09 | 1.37E-10 | -1.75E-12 |
| L4 | S7 | 4.27E-04 | -8.50E-05 | 1.20E-05 | -1.20E-06 | 8.32E-08 | -3.80E-09 | 1.03E-10 | -1.26E-12 |
| | S8 | 2.34E-04 | -4.07E-05 | 4.95E-06 | -4.23E-07 | 2.50E-08 | -9.72E-10 | 2.25E-11 | -2.35E-13 |
| L5 | S9 | 1.74E-04 | -2.90E-05 | 3.39E-06 | -2.78E-07 | 1.57E-08 | -5.87E-10 | 1.30E-11 | -1.30E-13 |
| | S10 | -4.43E-05 | 7.12E-06 | -8.22E-07 | 6.77E-08 | -3.88E-09 | 1.47E-10 | -3.32E-12 | 3.38E-14 |
| L6 | S11 | -1.83E-07 | 8.78E-09 | -2.63E-10 | 3.69E-12 | 3.68E-14 | -2.51E-15 | 4.12E-17 | -2.45E-19 |
| | S12 | -1.57E-07 | 8.14E-09 | -3.08E-10 | 8.36E-12 | -1.59E-13 | 2.00E-15 | -1.50E-17 | 5.08E-20 |
| L7 | S13 | -8.48E-09 | 2.45E-10 | -4.99E-12 | 6.67E-14 | -4.96E-16 | 6.17E-19 | 1.87E-20 | -1.03E-22 |
| | S14 | -3.80E-09 | 9.10E-11 | -1.57E-12 | 1.92E-14 | -1.57E-16 | 7.80E-19 | -1.86E-21 | 6.60E-25 |

It can be learned from Table 1.2 that each lens element in the camera lens component 10 is an aspheric lens element, and the camera lens component 10 includes 14 aspheric surfaces. Surface types z of the aspheric surfaces of the lens elements in the camera lens component 10 may be calculated by using the following aspheric surface formula:

$$z = \frac{cr^2}{1 + \sqrt{1 - Kc^2r^2}} + \sum_i Air^i$$

Here, z is a vector height of the aspheric surface, r is a radial coordinate of the aspheric surface, c is a spherical curvature of a vertex of the aspheric surface, K is a conic coefficient, i is a coefficient term of the aspheric surface, and is 30 in this embodiment, and Ai represents an ith-order aspheric coefficient.

For optical parameters of the camera module 101 formed by the foregoing lens elements, refer to Table 1.3.

Table 1.3 shows optical parameters of a camera module according to Embodiment 1 of this application.

| Optical parameters | |
|---|---|
| Focal length of a camera lens component: EFL/mm | 10.0 |
| F-number of the camera lens component: F# | 1.277 |
| Half of image height of the camera lens component: IMH/mm | 8.2 |
| Half field of view of the camera lens component: HFOV/degree | 40 |
| Total track length of the camera lens component: TTL/mm | 12.88 |
| Spacing GD between a first lens element unit and a second lens element unit | 2.88 |

It can be learned from Table 1.3 that the camera lens component 10 provided in Embodiment 1 of this application can implement features of a wide aperture and a large target surface when the camera lens component 10 is in a working state, to help improve imaging quality and imaging effect of the camera module 101. In addition, when the camera lens component 10 is switched to a non-working state, a spacing that can be compressed is large, so that thinning of the camera lens component 10 and the camera module 101 in the non-working state can be implemented.

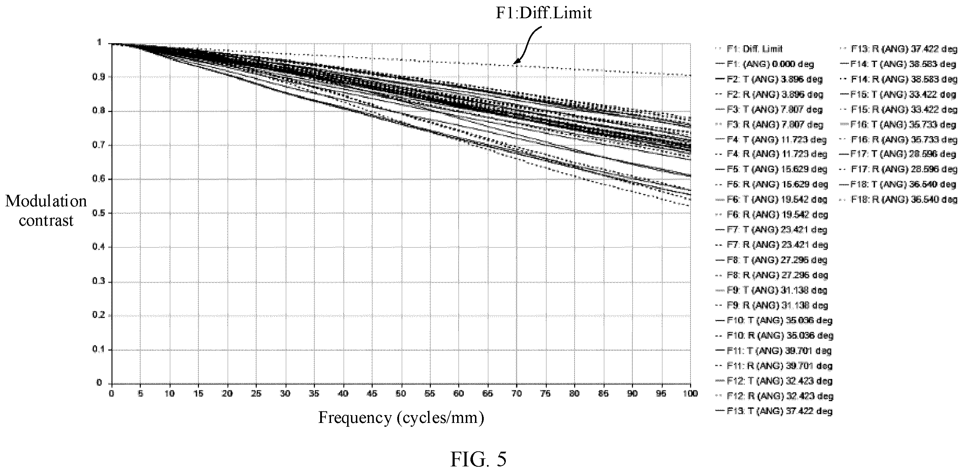

FIG. 5 is a curve diagram of a modulation transfer function of a camera module according to Embodiment 1 of this application.

In FIG. 5, a horizontal coordinate represents different frequencies, and a vertical coordinate represents contrast modulation, and can reflect imaging resolution of different spatial frequencies. A solid line in the figure represents a sagittal field of view, a dashed line in the figure represents a meridian field of view, and a line F1:Diff.Limit in the figure shows a limit curve of high-quality imaging. A line closer to the limit curve indicates better imaging quality. It can be learned from FIG. 5 that the camera module provided in Embodiment 1 of this application can implement high-quality imaging.

Embodiment 2

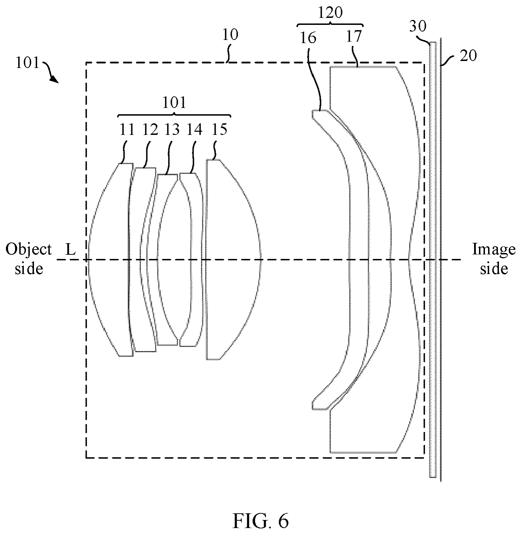

FIG. 6 is a diagram of a simulation structure when a camera lens component in a camera module is in a working state according to Embodiment 2 of this application.

In this embodiment, as shown in FIG. 6, the camera lens component 10 includes seven lens elements with focal power, and the first lens element unit 110 includes five lens elements with focal power, for example, a first lens element 11, a second lens element 12, a third lens element 13, a fourth lens element 14, and a fifth lens element 15. The second lens element unit 120 includes two lens elements with focal power, for example, a sixth lens element 16 and a seventh lens element 17. The first lens element 11, the second lens element 12, the third lens element 13, the fourth lens element 14, the fifth lens element 15, the sixth lens element 16, and the seventh lens element 17 are sequentially arranged along an optical axis L from an object side to an image side.

In other words, in the camera module 101, from the object side to the image side along a direction of the optical axis L, an aperture (not shown in the figure), the first lens element 11, the second lens element 12, the third lens element 13, the fourth lens element 14, the fifth lens element 15, the sixth lens element 16, the seventh lens element 17, a light filter 30, and an image sensor 20 are sequentially arranged. Light entering the camera module 101 sequentially passes through the camera lens component 10 and the light filter 30 in the foregoing sequence and is irradiated onto the image sensor 20, and is finally imaged on a photosensitive surface of the image sensor 20.

The first lens element 11 may have positive focal power, at least a part that is of an object-side surface of the first lens element 11 and that corresponds to the optical axis may be a convex surface, and at least a part that is of an image-side surface of the first lens element 11 and that corresponds to the optical axis may be a convex surface.

The second lens element 12 may have negative focal power, at least a part that is of an object-side surface of the second lens element 12 and that corresponds to the optical axis may be a concave surface, and at least a part that is of an image-side surface of the second lens element 12 and that corresponds to the optical axis may be a concave surface.

The third lens element 13 may have positive focal power, at least a part that is of an object-side surface of the third lens element 13 and that corresponds to the optical axis may be a convex surface, and at least a part that is of an image-side surface of the third lens element 13 and that corresponds to the optical axis may be a concave surface.

The fourth lens element 14 may have negative focal power, at least a part that is of an object-side surface of the fourth lens element 14 and that corresponds to the optical axis may be a convex surface, and at least a part that is of an image-side surface of the fourth lens element 14 and that corresponds to the optical axis is a concave surface.

The fifth lens element 15 may have positive focal power, at least a part that is of an object-side surface of the fifth lens element 15 and that corresponds to the optical axis may be a convex surface, and at least a part that is of an image-side surface of the fifth lens element 15 and that corresponds to the optical axis may be a convex surface.

The sixth lens element 16 may have positive focal power, at least a part that is of an object-side surface of the sixth lens element 16 and that corresponds to the optical axis may be a convex surface, and at least a part that is of an image-side surface of the sixth lens element 16 and that corresponds to the optical axis may be a concave surface. At least one of the object-side surface and the image-side surface of the sixth lens element 16 is a toric surface.

The seventh lens element 17 may have negative focal power, at least a part that is of an object-side surface of the seventh lens element 17 and that corresponds to the optical axis may be a convex surface, and at least a part that is of an image-side surface of the seventh lens element 17 and that corresponds to the optical axis may be a concave surface. At least one of the object-side surface and the image-side surface of the seventh lens element 17 is a toric surface.

When the camera lens component 10 is in a working state, as shown in FIG. 6, there is a large spacing on an optical axis between the object-side surface of the fifth lens element 15 in the first lens element unit 110 and the image-side surface of the sixth lens element 16 in the second lens element unit 120, and the camera lens component 10 can implement high-quality imaging with a wide aperture and a large target surface. When the camera lens component 10 switches from a working state to a non-working state, all lens elements of the first lens element unit 110 may move toward the second lens element unit 120 along the optical axis, to compress a spacing between the first lens element unit 110 and the second lens element unit 120, and reduce lengths of the camera lens component 10 and the camera module 101.

The following describes optical parameters and performance of the camera lens component 10 and each lens element when the camera lens component 10 is in a working state.

A half of image height IMH of the camera lens component 10 is equal to 8.43 mm, an f-number F# of the camera lens component 10 is equal to 1.359, and a ratio IMH/F# of the half of image height IMH of the camera lens component 10 to the f-number F# of the camera lens component 10 is equal to 6.203 mm.

A spacing GD between the first lens element unit 110 and the second lens element unit 120 on an axis is equal to 3.35 mm, and a total track length TTL of the camera lens component 10 is equal to 13.35 mm, a ratio of the spacing GD between the first lens element unit 110 and the second lens element unit 120 on the optical axis to the total track length TTL of the camera lens component 10 is GD/TTL=0.251.

A focal length EFL of the camera lens component 10 is 9.93 mm, and a ratio of the spacing GD between the first lens element unit 110 and the second lens element unit 120 on the optical axis to the focal length EFL of the camera lens component 10 is GD/EFL=0.337.

A ratio of a focal length EFL 1 of the first lens element unit 110 to the focal length EFL of the camera lens component 10 is EFL 1/EFL=0.947.

A ratio of a half of image height IMH of the camera lens component 10 to the total track length TTL of the camera lens component 10 is IMH/TTL=0.631.

A ratio of the focal length EFL of the camera lens component 10 to the total track length TTL of the camera lens component 10 is EFL/TTL=0.744.

A half field of view HFOV of the camera lens component 10 is equal to 40°, and the focal length EFL of the camera lens component 10 and a maximum half field of view HFOV of the camera lens component 10 satisfy the following: EFL*tan (HFOV)=8.332 mm.

Table 2.1 shows an optical parameter of each lens element in a camera module according to Embodiment 2 of this application.

| Lens element | Surface number | Curvature radius | Thickness | Focal length | Refractive index | Abbe coefficient |
|---|---|---|---|---|---|---|
| | Object surface | Unlimited | Unlimited | - | - | - |
| | Aperture | Unlimited | 0.00 | - | - | - |
| L1 | S1 | 6.01 | 1.50 | 6.17E+00 | 1.89E+00 | 3.72E+01 |
| | S2 | -53.59 | 0.06 | | | |
| L2 | S3 | -16.28 | 0.40 | -7.00E+00 | 1.64E+00 | 2.40E+01 |
| | S4 | 6.25 | 0.26 | | | |
| L3 | S5 | 7.56 | 0.40 | 7.08E+01 | 1.69E+00 | 1.82E+01 |
| | S6 | 8.75 | 1.27 | | | |

(continued)

| Lens element | Surface number | Curvature radius | Thickness | Focal length | Refractive index | Abbe coefficient |
|---|---|---|---|---|---|---|
| L4 | S7 | 29.40 | 0.40 | -3.54E+01 | 1.69E+00 | 1.82E+01 |
| | S8 | 13.24 | 0.17 | | | |
| L5 | S9 | 51.56 | 2.06 | 9.26E+00 | 1.55E+00 | 5.60E+01 |
| | S10 | -5.53 | 3.35 | | | |
| L6 | S11 | 37.83 | 0.74 | 1.99E+02 | 1.68E+00 | 1.92E+01 |
| | S12 | 52.21 | 0.84 | | | |
| L7 | S13 | 14.66 | 0.70 | -1.15E+01 | 1.55E+00 | 5.60E+01 |
| | S14 | 4.32 | 0.79 | | | |
| IR | S15 | Unlimited | 0.2142 | - | 1.52 | 64.17 |
| | S16 | Unlimited | 0.150185856 | | | |
| | Image surface | Unlimited | 0 | - | - | - |

L1 represents the first lens element 11. L2 represents the second lens element 12. L3 represents the third lens element 13. L4 represents the fourth lens element 14. L5 represents the fifth lens element 15. L6 represents the sixth lens element 16. L7 represents the seventh lens element 17. IR represents the light filter 30.

For specific illustrations of S1 to S16, the thickness, and the like, refer to Embodiment 1. Details are not described again in this embodiment.

Table 2.2 shows an aspherical coefficient of each lens element in a camera lens component according to Embodiment 2 of this application.

| | | Conic coefficient K | A2 | A4 | A6 | A8 | A10 | A12 | A14 |
|---|---|---|---|---|---|---|---|---|---|
| L1 | S1 | -9.07E-02 | 0.00E+00 | -2.66E-04 | 5.20E-04 | -5.28E-04 | 3.08E-04 | -1.17E-04 | 3.08E-05 |
| | S2 | 1.51E+01 | 0.00E+00 | 1.03E-02 | -7.64E-03 | 4.82E-03 | -2.14E-03 | 6.67E-04 | -1.50E-04 |
| L2 | S3 | -1.00E+00 | 0.00E+00 | 1.91E-02 | -1.52E-02 | 1.07E-02 | -5.31E-03 | 1.86E-03 | -4.73E-04 |
| | S4 | 1.74E+00 | 0.00E+00 | 2.91E-04 | -7.05E-03 | 7.72E-03 | -5.23E-03 | 2.42E-03 | -8.02E-04 |
| L3 | S5 | -7.26E+00 | 0.00E+00 | -9.27E-04 | -1.21E-03 | 1.67E-03 | -1.12E-03 | 5.13E-04 | -1.76E-04 |
| | S6 | -2.95E-01 | 0.00E+00 | 2.53E-03 | -1.48E-03 | 2.13E-03 | -1.86E-03 | 1.12E-03 | -4.80E-04 |
| L4 | S7 | 1.19E+01 | 0.00E+00 | -7.66E-03 | 4.00E-03 | -5.84E-03 | 5.60E-03 | -3.59E-03 | 1.59E-03 |
| | S8 | -1.00E+00 | 0.00E+00 | -7.28E-03 | 2.40E-03 | -2.26E-03 | 1.58E-03 | -7.48E-04 | 2.45E-04 |
| L5 | S9 | 2.61E+01 | 0.00E+00 | -1.75E-03 | 9.71E-04 | -9.24E-04 | 6.35E-04 | -2.93E-04 | 9.33E-05 |
| | S1 0 | -4.23E-02 | 0.00E+00 | -7.30E-04 | -3.42E-05 | 1.16E-04 | -1.03E-04 | 5.01E-05 | -1.59E-05 |
| L6 | S1 1 | -3.33E+00 | 0.00E+00 | -3.01E-03 | 9.66E-04 | -2.99E-04 | 6.33E-05 | -9.91E-06 | 1.14E-06 |
| | S1 2 | 6.67E-01 | 0.00E+00 | -4.59E-03 | 1.51E-03 | -3.84E-04 | 7.31E-05 | -1.11E-05 | 1.30E-06 |
| L7 | S1 3 | 5.42E-01 | 0.00E+00 | -2.23E-02 | 3.17E-03 | -2.47E-04 | -2.81E-06 | 2.73E-06 | -2.91E-07 |
| | S1 4 | -1.56E+01 | 0.00E+00 | -5.94E-04 | -1.53E-03 | 4.41E-04 | -6.57E-05 | 6.18E-06 | -3.96E-07 |
| | | A16 | A18 | A20 | A22 | A24 | A26 | 28 | 30 |
| L1 | S1 | -5.69E-06 | 7.55E-07 | -7.21E-08 | 4.91E-09 | -2.33E-10 | 7.28E-12 | -1.35E-13 | 1.12E-15 |
| | S2 | 2.49E-05 | -3.06E-06 | 2.81E-07 | -1.89E-08 | 9.05E-10 | -2.92E-11 | 5.68E-13 | -5.03E-15 |

(continued)

| | | Conic coefficient K | A2 | A4 | A6 | A8 | A10 | A12 | A14 |
|---|---|---|---|---|---|---|---|---|---|
| L2 | S3 | 8.88E-05 | -1.24E-05 | 1.27E-06 | -9.56E-08 | 5.07E-09 | -1.80E-10 | 3.83E-12 | -3.69E-14 |
| | S4 | 1.95E-04 | -3.47E-05 | 4.55E-06 | -4.32E-07 | 2.89E-08 | -1.29E-09 | 3.43E-11 | -4.11E-13 |
| L3 | S5 | 4.59E-05 | -8.98E-06 | 1.30E-06 | -1.38E-07 | 1.02E-08 | -5.01E-10 | 1.46E-11 | -1.91E-13 |
| | S6 | 1.48E-04 | -3.32E-05 | 5.38E-06 | -6.24E-07 | 5.04E-08 | -2.69E-09 | 8.52E-11 | -1.21E-12 |
| L4 | S7 | -4.98E-04 | 1.12E-04 | -1.82E-05 | 2.12E-06 | -1.72E-07 | 9.18E-09 | -2.92E-10 | 4.18E-12 |
| | S8 | -5.64E-05 | 9.19E-06 | -1.05E-06 | 8.31E-08 | -4.29E-09 | 1.31E-10 | -1.81E-12 | 8.00E-16 |
| L5 | S9 | -2.11E-05 | 3.41E-06 | -3.99E-07 | 3.33E-08 | -1.93E-09 | 7.39E-11 | -1.68E-12 | 1.72E-14 |
| | S1 0 | 3.47E-06 | -5.40E-07 | 6.03E-08 | -4.79E-09 | 2.65E-10 | -9.72E-12 | 2.12E-13 | -2.08E-15 |
| L6 | S1 1 | -9.42E-08 | 5.57E-09 | -2.32E-10 | 6.62E-12 | -1.24E-13 | 1.38E-15 | -7.46E-18 | 8.62E-21 |
| | S1 2 | -1. 13E-07 | 7.21E-09 | -3.36E-10 | 1.13E-11 | -2.65E-13 | 4.15E-15 | -3.89E-17 | 1.64E-19 |
| L7 | S1 3 | 1.61E-08 | -4.64E-10 | 1.63E-12 | 4.15E-13 | -1.72E-14 | 3.47E-16 | -3.72E-18 | 1.71E-20 |
| | S1 4 | 1.79E-08 | -5.84E-10 | 1.38E-11 | -2.33E-13 | 2.74E-15 | -2.15E-17 | 1.00E-19 | -2.11E-22 |

It can be learned from Table 2.2 that each lens element in the camera lens component 10 is an aspheric lens element, and the camera lens component 10 includes 14 aspheric surfaces. Surface types z of the aspheric surfaces of the lens elements in the camera lens component 10 may be calculated by using the following aspheric surface formula:

$$z = \frac{cr^2}{1 + \sqrt{1 - Kc^2r^2}} + \sum_i Air^i$$

Here, z is a vector height of the aspheric surface, r is a radial coordinate of the aspheric surface, c is a spherical curvature of a vertex of the aspheric surface, K is a conic coefficient, i is a coefficient term of the aspheric surface, and is 30 in this embodiment, and Ai represents an $i^{th}$-order aspheric coefficient.

For optical parameters of the camera module 101 formed by the foregoing lens elements, refer to Table 2.3.

Table 2.3 shows optical parameters of a camera module according to Embodiment 2 of this application.

| Optical parameters | |
|---|---|
| Focal length of a camera lens component: EFL/mm | 9.93 |
| F-number of the camera lens component: F# | 1.359 |
| Half of image height of the camera lens component: IMH/mm | 8.43 |
| Half field of view of the camera lens component: HFOV/degree | 40 |
| Total track length of the camera lens component: TTL/mm | 13.35 |
| Spacing GD between a first lens element unit and a second lens element unit | 3.35 |

It can be learned from Table 2.3 that the camera lens component 10 provided in Embodiment 2 of this application can implement features of a wide aperture and a large target surface when the camera lens component 10 is in a working state, to help improve imaging quality and imaging effect of the camera module 101. In addition, when the camera lens component 10 is switched to a non-working state, a spacing that can be compressed is large, so that thinning of the camera lens component 10 and the camera module 101 in the non-working state can be implemented.

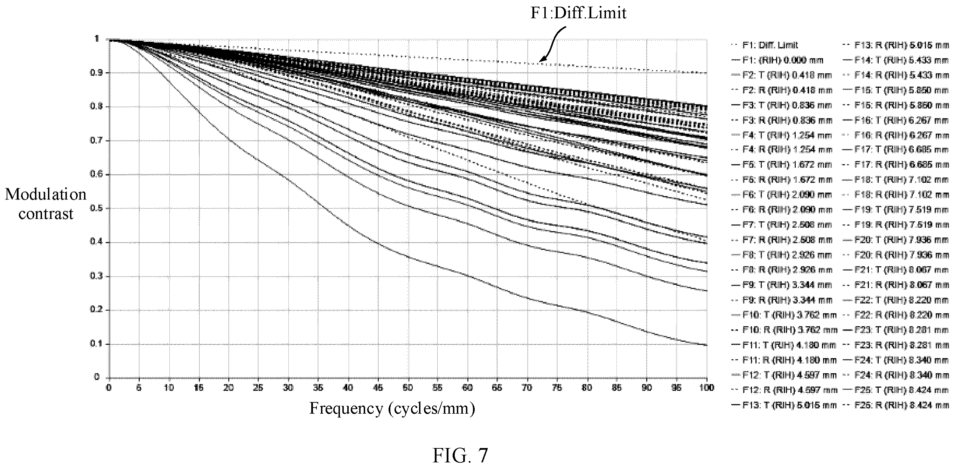

FIG. 7 is a curve diagram of a modulation transfer function of a camera module according to Embodiment 2 of this application.

In FIG. 7, a horizontal coordinate represents different frequencies, and a vertical coordinate represents contrast modulation, and can reflect imaging resolution of different spatial frequencies. A solid line in the figure represents a sagittal field of view, a dashed line in the figure represents a meridian field of view, and a line F1:Diff.Limit in the figure shows a limit curve of high-quality imaging. A line closer to the limit curve indicates better imaging quality. It can be learned from FIG. 7 that the camera module provided in Embodiment 2 of this application can implement high-quality imaging.

Embodiment 3

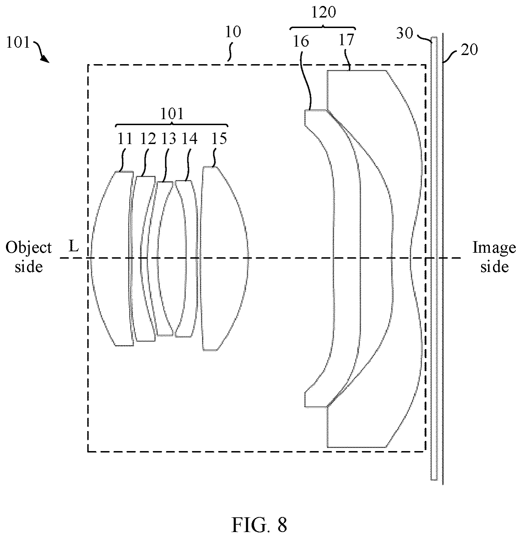

FIG. 8 is a diagram of a simulation structure when a camera lens component in a camera module is in a working state according to Embodiment 3 of this application.

In this embodiment, as shown in FIG. 8, the camera lens component 10 includes seven lens elements with focal power, and the first lens element unit 110 includes five lens elements with focal power, for example, a first lens element 11, a second lens element 12, a third lens element 13, a fourth lens element 14, and a fifth lens element 15. The second lens element unit 120 includes two lens elements with focal power, for example, a sixth lens element 16 and a seventh lens element 17. The first lens element 11, the second lens element 12, the third lens element 13, the fourth lens element 14, the fifth lens element 15, the sixth lens element 16, and the seventh lens element 17 are sequentially arranged along an optical axis L from an object side to an image side.

In other words, in the camera module 101, from the object side to the image side along a direction of the optical axis L, an aperture (not shown in the figure), the first lens element 11, the second lens element 12, the third lens element 13, the fourth lens element 14, the fifth lens element 15, the sixth lens element 16, the seventh lens element 17, a light filter 30, and an image sensor 20 are sequentially arranged. Light entering the camera module 101 sequentially passes through the camera lens component 10 and the light filter 30 in the foregoing sequence and is irradiated onto the image sensor 20, and is finally imaged on a photosensitive surface of the image sensor 20.

The first lens element 11 may have positive focal power, at least a part that is of an object-side surface of the first lens element 11 and that corresponds to the optical axis may be a convex surface, and at least a part that is of an image-side surface of the first lens element 11 and that corresponds to the optical axis may be a convex surface.

The second lens element 12 may have negative focal power, at least a part that is of an object-side surface of the second lens element 12 and that corresponds to the optical axis may be a concave surface, and at least a part that is of an image-side surface of the second lens element 12 and that corresponds to the optical axis may be a concave surface.

The third lens element 13 may have positive focal power, at least a part that is of an object-side surface of the third lens element 13 and that corresponds to the optical axis may be a convex surface, and at least a part that is of an image-side surface of the third lens element 13 and that corresponds to the optical axis may be a concave surface.

The fourth lens element 14 may have negative focal power, at least a part that is of an object-side surface of the fourth lens element 14 and that corresponds to the optical axis may be a concave surface, and at least a part that is of an image-side surface of the fourth lens element 14 and that corresponds to the optical axis is a convex surface.

The fifth lens element 15 may have positive focal power, at least a part that is of an object-side surface of the fifth lens element 15 and that corresponds to the optical axis may be a convex surface, and at least a part that is of an image-side surface of the fifth lens element 15 and that corresponds to the optical axis may be a convex surface.

The sixth lens element 16 may have positive focal power, at least a part that is of an object-side surface of the sixth lens element 16 and that corresponds to the optical axis may be a convex surface, and at least a part that is of an image-side surface of the sixth lens element 16 and that corresponds to the optical axis may be a concave surface. At least one of the object-side surface and the image-side surface of the sixth lens element 16 is a toric surface.

The seventh lens element 17 may have negative focal power, at least a part that is of an object-side surface of the seventh lens element 17 and that corresponds to the optical axis may be a convex surface, and at least a part that is of an image-side surface of the seventh lens element 17 and that corresponds to the optical axis may be a concave surface. At least one of the object-side surface and the image-side surface of the seventh lens element 17 is a toric surface.

When the camera lens component 10 is in a working state, as shown in FIG. 8, there is a large spacing on an optical axis between the object-side surface of the fifth lens element 15 in the first lens element unit 110 and the image-side surface of the sixth lens element 16 in the second lens element unit 120, and the camera lens component 10 can implement high-quality imaging with a wide aperture and a large target surface. When the camera lens component 10 switches from a working state to a non-working state, all lens elements of the first lens element unit 110 may move toward the second lens element unit 120 along the optical axis, to compress a spacing between the first lens element unit 110 and the second lens element unit 120, and reduce lengths of the camera lens component 10 and the camera module 101.

The following describes optical parameters and performance of the camera lens component 10 and each lens element when the camera lens component 10 is in a working state.

A half of image height IMH of the camera lens component 10 is equal to 8.42 mm, an f-number F# of the camera lens component 10 is equal to 1.51, and a ratio IMH/F# of the half of image height IMH of the camera lens component 10 to the f-number F# of the camera lens component 10 is equal to 5.576 mm.

A spacing GD between the first lens element unit 110 and the second lens element unit 120 on an axis is equal to 3.19 mm, and a total track length TTL of the camera lens component 10 is equal to 13.19 mm, a ratio of the spacing GD between the first lens element unit 110 and the second lens element unit 120 on the optical axis to the total track length TTL of the camera lens component 10 is GD/TTL=0.242.

A focal length EFL of the camera lens component 10 is 9.82 mm, and a ratio of the spacing GD between the first lens element unit 110 and the second lens element unit 120 on the optical axis to the focal length EFL of the camera lens component 10 is GD/EFL=0.325.

A ratio of a focal length EFL 1 of the first lens element unit 110 to the focal length EFL of the camera lens component 10 is EFL 1/EFL=0.969.

A ratio of a half of image height IMH of the camera lens component 10 to the total track length TTL of the camera lens component 10 is IMH/TTL=0.638.

A ratio of the focal length EFL of the camera lens component 10 to the total track length TTL of the camera lens component 10 is EFL/TTL=0.745.

A half field of view HFOV of the camera lens component 10 is equal to 39.8°, and the focal length EFL of the camera lens component 10 and a maximum half field of view HFOV of the camera lens component 10 satisfy the following: EFL*tan (HFOV)=8.182 mm.

Table 3.1 shows an optical parameter of each lens element in a camera module according to Embodiment 3 of this application.

| Lens element | Surface number | Curvature radius | Thickness | Focal length | Refractive index | Abbe coefficient |
|---|---|---|---|---|---|---|
| | Object surface | Unlimited | Unlimited | - | - | - |
| | Aperture | Unlimited | 0.00 | - | - | - |
| L1 | S1 | 6.03 | 1.41 | 6.53E+00 | 1.89E+00 | 3.72E+01 |
| | S2 | -129.34 | 0.11 | | | |
| L2 | S3 | -20.52 | 0.33 | -7.42E+00 | 1.64E+00 | 2.40E+01 |
| | S4 | 6.22 | 0.26 | | | |
| L3 | S5 | 7.67 | 0.38 | 6.53E+01 | 1.69E+00 | 1.82E+01 |
| | S6 | 9.06 | 1.07 | | | |
| L4 | S7 | -114.27 | 0.40 | -3.03E+01 | 1.69E+00 | 1.82E+01 |
| | S8 | 25.47 | 0.12 | | | |
| L5 | S9 | 32.51 | 1.79 | 9.21E+00 | 1.55E+00 | 5.60E+01 |
| | S10 | -5.84 | 3.19 | | | |
| L6 | S11 | 36.41 | 1.01 | 2.77E+02 | 1.68E+00 | 1.92E+01 |
| | S12 | 44.68 | 1.18 | | | |
| L7 | S13 | 11.09 | 0.70 | -1.47E+01 | 1.55E+00 | 5.60E+01 |
| | S14 | 4.56 | 0.79 | | | |
| IR | S15 | Unlimited | 0.2142 | - | 1.52 | 64.17 |
| | S16 | Unlimited | 0.196023527 | | | |
| | Image surface | Unlimited | 0 | - | - | - |

L1 represents the first lens element 11. L2 represents the second lens element 12. L3 represents the third lens element 13. L4 represents the fourth lens element 14. L5 represents the fifth lens element 15. L6 represents the sixth lens element 16. L7 represents the seventh lens element 17. IR represents the light filter 30.

For specific illustrations of S1 to S16, the thickness, and the like, refer to Embodiment 1. Details are not described again in this embodiment.

Table 3.2 shows aspherical coefficients of the lenses in the camera lens component according to Embodiment 3 of this application.

| | | Conic coefficient K | A2 | A4 | A6 | A8 | A10 | A12 | A14 |
|---|---|---|---|---|---|---|---|---|---|
| L1 | S1 | -1.06E-01 | 0.00E+00 | -1.48E-04 | 3.71E-04 | -4.55E-04 | 3.10E-04 | -1.41E-04 | 4.48E-05 |
| | S2 | -4.05E+00 | 0.00E+00 | 9.73E-03 | -7.16E-03 | 4.83E-03 | -2.47E-03 | 9.44E-04 | -2.69E-04 |
| L2 | S3 | -3.85E+00 | 0.00E+00 | 2.14E-02 | -2.01E-02 | 1.63E-02 | -9.43E-03 | 3.97E-03 | -1.23E-03 |
| | S4 | 1.77E+00 | 0.00E+00 | 3.80E-03 | -1.54E-02 | 1.71E-02 | -1.26E-02 | 6.65E-03 | -2.56E-03 |
| L3 | S5 | -7.39E+00 | 0.00E+00 | 5.17E-04 | -2.66E-03 | 2.66E-03 | -1.79E-03 | 9.07E-04 | -3.53E-04 |
| | S6 | -1.71E-02 | 0.00E+00 | 4.25E-03 | -2.86E-03 | 4.06E-03 | -4.03E-03 | 2.77E-03 | -1.34E-03 |
| L4 | S7 | -4.00E+01 | 0.00E+00 | -6.48E-03 | 1.34E-03 | -1.33E-03 | 1.01E-03 | -5.35E-04 | 1.92E-04 |
| | S8 | 0.00E+00 | 0.00E+00 | -7.07E-03 | 1.10E-03 | -3.22E-04 | 8.83E-05 | -2.63E-05 | 6.16E-06 |
| L5 | S9 | 2.61E+01 | 0.00E+00 | -2.12E-03 | 3.70E-04 | 1.28E-04 | -1.23E-04 | 4.94E-05 | -1.35E-05 |
| | S10 | -6.32E-02 | 0.00E+00 | -7.38E-04 | -2.14E-04 | 2.21E-04 | -1.28E-04 | 4.92E-05 | -1.32E-05 |
| L6 | S11 | 7.05E+00 | 0.00E+00 | -1.84E-03 | 4.25E-04 | -2.87E-04 | 1.10E-04 | -2.72E-05 | 4.52E-06 |
| | S12 | 4.89E+01 | 0.00E+00 | -1.31E-03 | 1.14E-04 | -1.48E-04 | 6.41E-05 | -1.52E-05 | 2.28E-06 |
| L7 | S13 | -7.73E+00 | 0.00E+00 | -1.05E-02 | -3.21E-04 | -1.66E-04 | 1.45E-04 | -3.62E-05 | 5.09E-06 |
| | S14 | -9.44E+00 | 0.00E+00 | 4.82E-03 | -3.71E-03 | 8.17E-04 | -1.06E-04 | 9.31E-06 | -5.77E-07 |
| | | A16 | A18 | A20 | A22 | A24 | A26 | 28 | 30 |
| L1 | S1 | -1.02E-05 | 1.68E-06 | -2.01E-07 | 1.72E-08 | -1.03E-09 | 4.07E-11 | -9.60E-13 | 1.02E-14 |
| | S2 | 5.71E-05 | -9.00E-06 | 1.04E-06 | -8.76E-08 | 5.16E-09 | -2.02E-10 | 4.73E-12 | -4.98E-14 |
| L2 | S3 | 2.82E-04 | -4.81E-05 | 6.03E-06 | -5.49E-07 | 3.51E-08 | -1.50E-09 | 3.82E-11 | -4.40E-13 |
| | S4 | 7.26E-04 | -1.52E-04 | 2.33E-05 | -2.57E-06 | 2.00E-07 | -1.03E-08 | 3.14E-10 | -4.33E-12 |
| L3 | S5 | 1.04E-04 | -2.31E-05 | 3.75E-06 | -4.38E-07 | 3.54E-08 | -1.87E-09 | 5.82E-11 | -8.03E-13 |
| | S6 | 4.69E-04 | -1.19E-04 | 2.21E-05 | -2.94E-06 | 2.74E-07 | -1.69E-08 | 6.24E-10 | -1.04E-11 |
| L4 | S7 | -4.55E-05 | 6.66E-06 | -4.27E-07 | -3.64E-08 | 1.08E-08 | -1.05E-09 | 5.03E-11 | -9.86E-13 |
| | S8 | -9.59E-07 | 9.29E-08 | -5.05E-09 | 1.17E-10 | 2.21E-14 | 0.00E+0 0 | 0.00E+0 0 | 0.00E+0 0 |
| L5 | S9 | 2.77E-06 | -4.37E-07 | 5.25E-08 | -4.71E-09 | 3.06E-10 | -1.35E-11 | 3.59E-13 | -4.36E-15 |
| | S10 | 2.57E-06 | -3.76E-07 | 4.16E-08 | -3.46E-09 | 2.09E-10 | -8.61E-12 | 2.15E-13 | -2.44E-15 |
| L6 | S11 | -5.25E-07 | 4.34E-08 | -2.56E-09 | 1.08E-10 | -3.12E-12 | 5.96E-14 | -6.74E-16 | 3.41E-18 |
| | S12 | -2.32E-07 | 1.65E-08 | -8.31E-10 | 2.97E-11 | -7.34E-13 | 1.20E-14 | -1.16E-16 | 5.04E-19 |
| L7 | S13 | -4.64E-07 | 2.90E-08 | -1.27E-09 | 3.86E-11 | -8.05E-13 | 1.09E-14 | -8.71E-17 | 3.08E-19 |
| | S14 | 2.60E-08 | -8.63E-10 | 2.11E-11 | -3.76E-13 | 4.74E-15 | -4.03E-17 | 2.07E-19 | -4.85E-22 |

It can be learned from Table 3.2 that each lens element in the camera lens component 10 is an aspheric lens element, and the camera lens component 10 includes 14 aspheric surfaces. Surface types z of the aspheric surfaces of the lens elements in the camera lens component 10 may be calculated by using the following aspheric surface formula:

$$z = \frac{cr^2}{1 + \sqrt{1 - Kc^2r^2}} + \sum_i Air^i$$

Here, z is a vector height of the aspheric surface, r is a radial coordinate of the aspheric surface, c is a spherical curvature of a vertex of the aspheric surface, K is a conic coefficient, i is a coefficient term of the aspheric surface, and is 30 in this embodiment, and Ai represents an ith-order aspheric coefficient.

For optical parameters of the camera module 101 formed by the foregoing lens elements, refer to Table 3.3.

Table 3.3 shows optical parameters of a camera module according to Embodiment 3 of this application.

| Optical parameters | |
|---|---|
| Focal length of a camera lens component: EFL/mm | 9.82 |
| F-number of the camera lens component: F# | 1.51 |
| Half of image height of the camera lens component: IMH/mm | 8.42 |
| Half field of view of the camera lens component: HFOV/degree | 39.8 |
| Total track length of the camera lens component: TTL/mm | 13.19 |
| Spacing GD between a first lens element unit and a second lens element unit | 3.19 |

It can be learned from Table 3.3 that the camera lens component 10 provided in Embodiment 3 of this application can implement features of a wide aperture and a large target surface when the camera lens component 10 is in a working state, to help improve imaging quality and imaging effect of the camera module 101. In addition, when the camera lens component 10 is switched to a non-working state, a spacing that can be compressed is large, so that thinning of the camera lens component 10 and the camera module 101 in the non-working state can be implemented.

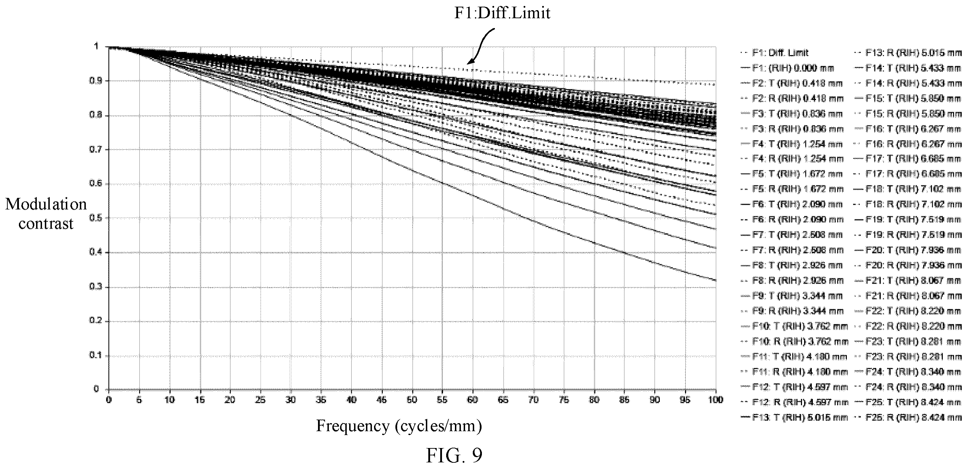

FIG. 9 is a curve diagram of a modulation transfer function of a camera module according to Embodiment 3 of this application.

In FIG. 9, a horizontal coordinate represents different frequencies, and a vertical coordinate represents contrast modulation, and can reflect imaging resolution of different spatial frequencies. A solid line in the figure represents a sagittal field of view, a dashed line in the figure represents a meridian field of view, and a line F1:Diff.Limit in the figure shows a limit curve of high-quality imaging. A line closer to the limit curve indicates better imaging quality. It can be learned from FIG. 9 that the camera module provided in Embodiment 3 of this application can implement high-quality imaging.

Embodiment 4

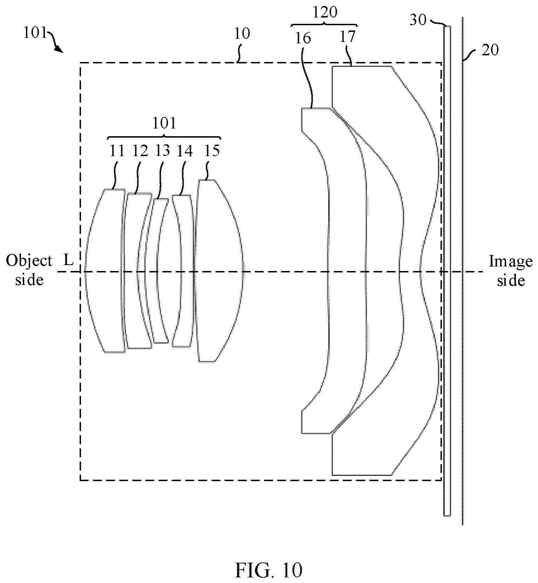

FIG. 10 is a diagram of a simulation structure when a camera lens component in a camera module is in a working state according to Embodiment 4 of this application.

In this embodiment, as shown in FIG. 10, the camera lens component 10 includes seven lens elements with focal power, and the first lens element unit 110 includes five lens elements with focal power, for example, a first lens element 11, a second lens element 12, a third lens element 13, a fourth lens element 14, and a fifth lens element 15. The second lens element unit 120 includes two lens elements with focal power, for example, a sixth lens element 16 and a seventh lens element 17. The first lens element 11, the second lens element 12, the third lens element 13, the fourth lens element 14, the fifth lens element 15, the sixth lens element 16, and the seventh lens element 17 are sequentially arranged along an optical axis L from an object side to an image side.

In other words, in the camera module 101, from the object side to the image side along a direction of the optical axis L, an aperture (not shown in the figure), the first lens element 11, the second lens element 12, the third lens element 13, the fourth lens element 14, the fifth lens element 15, the sixth lens element 16, the seventh lens element 17, a light filter 30, and an image sensor 20 are sequentially arranged. Light entering the camera module 101 sequentially passes through the camera lens component 10 and the light filter 30 in the foregoing sequence and is irradiated onto the image sensor 20, and is finally imaged on a photosensitive surface of the image sensor 20.

The first lens element 11 may have positive focal power, at least a part that is of an object-side surface of the first lens element 11 and that corresponds to the optical axis may be a convex surface, and at least a part that is of an image-side surface of the first lens element 11 and that corresponds to the optical axis may be a concave surface.

The second lens element 12 may have negative focal power, at least a part that is of an object-side surface of the second lens element 12 and that corresponds to the optical axis may be a concave surface, and at least a part that is of an image-side surface of the second lens element 12 and that corresponds to the optical axis may be a concave surface.

The third lens element 13 may have positive focal power, at least a part that is of an object-side surface of the third lens element 13 and that corresponds to the optical axis may be a convex surface, and at least a part that is of an image-side surface of the third lens element 13 and that corresponds to the optical axis may be a concave surface.

The fourth lens element 14 may have negative focal power, at least a part that is of an object-side surface of the fourth lens element 14 and that corresponds to the optical axis may be a concave surface, and at least a part that is of an image-side surface of the fourth lens element 14 and that corresponds to the optical axis is a concave surface.

The fifth lens element 15 may have positive focal power, at least a part that is of an object-side surface of the fifth lens element 15 and that corresponds to the optical axis may be a convex surface, and at least a part that is of an image-side surface of the fifth lens element 15 and that corresponds to the optical axis may be a convex surface.

The sixth lens element 16 may have positive focal power, at least a part that is of an object-side surface of the sixth lens element 16 and that corresponds to the optical axis may be a convex surface, and at least a part that is of an image-side surface of the sixth lens element 16 and that corresponds to the optical axis may be a concave surface. At least one of the object-side surface and the image-side surface of the sixth lens element 16 is a toric surface.

The seventh lens element 17 may have negative focal power, at least a part that is of an object-side surface of the seventh lens element 17 and that corresponds to the optical axis may be a convex surface, and at least a part that is of an image-side surface of the seventh lens element 17 and that corresponds to the optical axis may be a concave surface. At least one of the object-side surface and the image-side surface of the seventh lens element 17 is a toric surface.

When the camera lens component 10 is in a working state, as shown in FIG. 10, there is a large spacing on an optical axis between the object-side surface of the fifth lens element 15 in the first lens element unit 110 and the image-side surface of the sixth lens element 16 in the second lens element unit 120, and the camera lens component 10 can implement high-quality imaging with a wide aperture and a large target surface. When the camera lens component 10 switches from a working state to a non-working state, all lens elements of the first lens element unit 110 may move toward the second lens element unit 120 along the optical axis, to compress a spacing between the first lens element unit 110 and the second lens element unit 120, and reduce lengths of the camera lens component 10 and the camera module 101.

The following describes optical parameters and performance of the camera lens component 10 and each lens element when the camera lens component 10 is in a working state.

A half of image height IMH of the camera lens component 10 is equal to 8.30 mm, an f-number F# of the camera lens component 10 is equal to 1.71, and a ratio IMH/F# of the half of image height IMH of the camera lens component 10 to the f-number F# of the camera lens component 10 is equal to 4.854 mm.

A spacing GD between the first lens element unit 110 and the second lens element unit 120 on an axis is equal to 2.81 mm, and a total track length TTL of the camera lens component 10 is equal to 12.45 mm, a ratio of the spacing GD between the first lens element unit 110 and the second lens element unit 120 on the optical axis to the total track length TTL of the camera lens component 10 is GD/TTL=0.226.

A focal length EFL of the camera lens component 10 is 9.22 mm, and a ratio of the spacing GD between the first lens element unit 110 and the second lens element unit 120 on the optical axis to the focal length EFL of the camera lens component 10 is GD/EFL=0.305.

A ratio of a focal length EFL 1 of the first lens element unit 110 to the focal length EFL of the camera lens component 10 is EFL 1/EFL=0.993.

A ratio of a half of image height IMH of the camera lens component 10 to the total track length TTL of the camera lens component 10 is IMH/TTL=0.667.

A ratio of the focal length EFL of the camera lens component 10 to the total track length TTL of the camera lens component 10 is EFL/TTL=0.741.

A half field of view HFOV of the camera lens component 10 is equal to 41.99°, and the focal length EFL of the camera lens component 10 and a maximum half field of view HFOV of the camera lens component 10 satisfy the following: EFL*tan (HFOV)=8.30 mm.

Table 4.1 shows an optical parameter of each lens element in a camera module according to Embodiment 4 of this application.

| Lens element | Surface number | Curvature radius | Thickness | Focal length | Refractive index | Abbe coefficient |
|---|---|---|---|---|---|---|
| | Object surface | Unlimited | Unlimited | - | - | - |
| | Aperture | Unlimited | 0.00 | - | - | - |
| L1 | S1 | 5.84 | 1.19 | 6.65E+00 | 1.89E+00 | 3.72E+01 |
| | S2 | 505.37 | 0.10 | | | |
| L2 | S3 | -31.43 | 0.45 | -7.75E+00 | 1.64E+00 | 2.40E+01 |
| | S4 | 5.92 | 0.24 | | | |
| L3 | S5 | 7.51 | 0.40 | 5.60E+01 | 1.69E+00 | 1.82E+01 |
| | S6 | 9.12 | 0.79 | | | |

(continued)

| Lens element | Surface number | Curvature radius | Thickness | Focal length | Refractive index | Abbe coefficient |
|---|---|---|---|---|---|---|
| L4 | S7 | -30.50 | 0.40 | -2.31E+01 | 1.69E+00 | 1.82E+01 |
| | S8 | 33.22 | 0.05 | | | |
| L5 | S9 | 25.14 | 1.61 | 8.56E+00 | 1.55E+00 | 5.60E+01 |
| | S10 | -5.62 | 2.81 | | | |
| L6 | S11 | 34.71 | 1.25 | 5.00E+02 | 1.68E+00 | 1.92E+01 |
| | S12 | 38.10 | 1.11 | | | |
| L7 | S13 | 5.07 | 0.70 | -1.73E+01 | 1.55E+00 | 5.60E+01 |
| | S14 | 3.14 | 0.79 | | | |
| IR | S15 | Unlimited | 0.2142 | - | 1.52 | 64.17 |
| | S16 | Unlimited | 0.388330062 | | | |
| | Image surface | Unlimited | 0 | - | - | - |

L1 represents the first lens element 11. L2 represents the second lens element 12. L3 represents the third lens element 13. L4 represents the fourth lens element 14. L5 represents the fifth lens element 15. L6 represents the sixth lens element 16. L7 represents the seventh lens element 17. IR represents the light filter 30.

For specific illustrations of S1 to S16, the thickness, and the like, refer to Embodiment 1. Details are not described again in this embodiment.

Table 4.2 shows an aspherical coefficient of each lens element in a camera lens component according to Embodiment 4 of this application.

| | | Conic coefficient K | A2 | A4 | A6 | A8 | A10 | A12 | A14 |
|---|---|---|---|---|---|---|---|---|---|
| L1 | S1 | -1.92E-01 | 0.00E+00 | -1.38E-04 | 2.84E-04 | -4.38E-04 | 3.53E-04 | -1.87E-04 | 6.83E-05 |
| | S2 | 2.73E+01 | 0.00E+00 | 6.37E-03 | -3.28E-03 | 2.45E-03 | -1.52E-03 | 7.00E-04 | -2.34E-04 |
| L2 | S3 | -1.22E+01 | 0.00E+00 | 1.22E-02 | -6.81E-03 | 5.64E-03 | -3.68E-03 | 1.77E-03 | -6.23E-04 |
| | S4 | 1.74E+00 | 0.00E+00 | -1.57E-03 | -4.38E-03 | 6.20E-03 | -5.66E-03 | 3.63E-03 | -1.65E-03 |
| L3 | S5 | -6.90E+00 | 0.00E+00 | 3.09E-04 | -1.38E-03 | 1.56E-03 | -1.36E-03 | 8.97E-04 | -4.23E-04 |
| | S6 | -6.78E-01 | 0.00E+00 | 4.28E-03 | -2.10E-03 | 3.03E-03 | -3.66E-03 | 3.02E-03 | -1.72E-03 |
| L4 | S7 | 2.15E+01 | 0.00E+00 | -4.14E-03 | -6.63E-04 | 9.92E-05 | 2.19E-04 | -3.64E-04 | 2.89E-04 |
| | S8 | 3.15E+01 | 0.00E+00 | -3.04E-03 | -3.70E-03 | 4.15E-03 | -3.24E-03 | 1.79E-03 | -7.06E-04 |
| L5 | S9 | 2.45E+01 | 0.00E+00 | 1.03E-04 | -3.40E-03 | 3.75E-03 | -2.68E-03 | 1.34E-03 | -4.81E-04 |
| | S10 | 5.51E-03 | 0.00E+00 | -1.01E-03 | -6.37E-04 | 6.97E-04 | -4.60E-04 | 1.99E-04 | -5.82E-05 |
| L6 | S11 | 2.03E+01 | 0.00E+00 | -1.21E-03 | 2.44E-05 | -8.13E-05 | 4.12E-05 | -1.25E-05 | 2.48E-06 |
| | S12 | 3.83E+01 | 0.00E+00 | -1.29E-03 | -1.05E-04 | 1.26E-05 | 1.18E-05 | -5.21E-06 | 1.04E-06 |
| L7 | S13 | -1.18E+01 | 0.00E+00 | -6.81E-03 | -1.66E-03 | -9.72E-05 | 2.15E-04 | -6.08E-05 | 9.41E-06 |
| | S14 | -5.48E+00 | 0.00E+00 | 4.96E-03 | -4.87E-03 | 1.18E-03 | -1.68E-04 | 1.61E-05 | -1.10E-06 |
| | | A16 | A18 | A20 | A22 | A24 | A26 | 28 | 30 |
| L1 | S1 | -1.77E-05 | 3.29E-06 | -4.42E-07 | 4.23E-08 | -2.82E-09 | 1.25E-10 | -3.27E-12 | 3.85E-14 |
| | S2 | 5.66E-05 | -9.94E-06 | 1.26E-06 | -1.15E-07 | 7.22E-09 | -3.00E-10 | 7.36E-12 | -8.10E-14 |

(continued)

| | | A16 | A18 | A20 | A22 | A24 | A26 | 28 | 30 |
|---|---|---|---|---|---|---|---|---|---|
| L2 | S3 | 1.59E-04 | -2.97E-05 | 4.01E-06 | -3.86E-07 | 2.58E-08 | -1.14E-09 | 2.96E-11 | -3.44E-13 |
| | S4 | 5.38E-04 | -1.26E-04 | 2.13E-05 | -2.54E-06 | 2.09E-07 | -1.13E-08 | 3.59E-10 | -5.10E-12 |
| L3 | S5 | 1.41E-04 | -3.36E-05 | 5.66E-06 | -6.68E-07 | 5.36E-08 | -2.79E-09 | 8.46E-11 | -1.13E-12 |
| | S6 | 6.84E-04 | -1.94E-04 | 3.91E-05 | -5.58E-06 | 5.47E-07 | -3.50E-08 | 1.32E-09 | -2.21E-11 |
| L4 | S7 | -1.44E-04 | 4.83E-05 | -1.11E-05 | 1.78E-06 | -1.92E-07 | 1.34E-08 | -5.43E-10 | 9.71E-12 |
| | S8 | 2.02E-04 | -4.21E-05 | 6.40E-06 | -6.99E-07 | 5.33E-08 | -2.68E-09 | 8.02E-11 | -1.07E-12 |
| L5 | S9 | 1.25E-04 | -2.35E-05 | 3.21E-06 | -3.14E-07 | 2.14E-08 | -9.64E-10 | 2.57E-11 | -3.07E-13 |
| | S10 | 1.17E-05 | -1.61E-06 | 1.48E-07 | -8.61E-09 | 2.64E-10 | -9.73E-13 | -1.75E-13 | 3.51E-15 |
| L6 | S11 | -3.39E-07 | 3.27E-08 | -2.25E-09 | 1.09E-10 | -3.68E-12 | 8.15E-14 | -1.07E-15 | 6.23E-18 |
| | S12 | -1.26E-07 | 1.02E-08 | -5.73E-10 | 2.24E-11 | -5.96E-13 | 1.04E-14 | -1.06E-16 | 4.85E-19 |
| L7 | S13 | -9.47E-07 | 6.59E-08 | -3.24E-09 | 1.13E-10 | -2.72E-12 | 4.32E-14 | -4.09E-16 | 1.75E-18 |
| | S14 | 5.49E-08 | -2.02E-09 | 5.51E-11 | -1.10E-12 | 1.56E-14 | -1.50E-16 | 8.69E-19 | -2.31E-21 |

It can be learned from Table 4.2 that each lens element in the camera lens component 10 is an aspheric lens element, and the camera lens component 10 includes 14 aspheric surfaces. Surface types z of the aspheric surfaces of the lens elements in the camera lens component 10 may be calculated by using the following aspheric surface formula:

$$z = \frac{cr^2}{1 + \sqrt{1 - Kc^2r^2}} + \sum_i Air^i$$

Here, z is a vector height of the aspheric surface, r is a radial coordinate of the aspheric surface, c is a spherical curvature of a vertex of the aspheric surface, K is a conic coefficient, i is a coefficient term of the aspheric surface, and is 30 in this embodiment, and Ai represents an $i^{th}$-order aspheric coefficient.

For optical parameters of the camera module 101 formed by the foregoing lens elements, refer to Table 4.3.

Table 4.3 shows optical parameters of a camera module according to Embodiment 4 of this application.

| Optical parameters | |
|---|---|
| Focal length of a camera lens component: EFL/mm | 9.22 |
| F-number of the camera lens component: F# | 1.71 |
| Half of image height of the camera lens component: IMH/mm | 8.30 |
| Half field of view of the camera lens component: HFOV/degree | 41.99 |
| Total track length of the camera lens component: TTL/mm | 12.45 |
| Spacing GD between a first lens element unit and a second lens element unit | 2.81 |

It can be learned from Table 4.3 that the camera lens component 10 provided in Embodiment 4 of this application can implement features of a wide aperture and a large target surface when the camera lens component 10 is in a working state, to help improve imaging quality and imaging effect of the camera module 101. In addition, when the camera lens component 10 is switched to a non-working state, a spacing that can be compressed is large, so that thinning of the camera lens component 10 and the camera module 101 in the non-working state can be implemented.

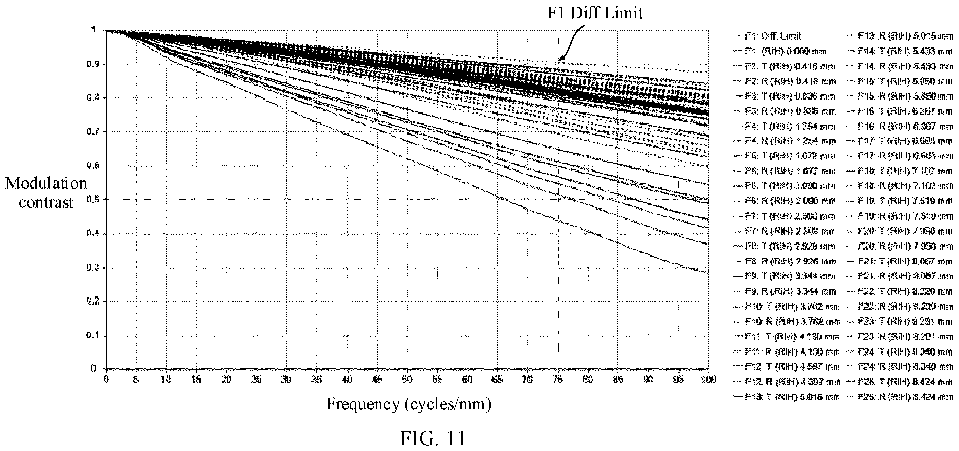

FIG. 11 is a curve diagram of a modulation transfer function of a camera module according to Embodiment 4 of this application.

In FIG. 11, a horizontal coordinate represents different frequencies, and a vertical coordinate represents contrast modulation, and can reflect imaging resolution of different spatial frequencies. A solid line in the figure represents a sagittal field of view, a dashed line in the figure represents a meridian field of view, and a line F1:Diff.Limit in the figure shows a limit curve of high-quality imaging. A line closer to the limit curve indicates better imaging quality. It can be learned from FIG. 11 that the camera module provided in Embodiment 4 of this application can implement high-quality imaging.

Embodiment 5

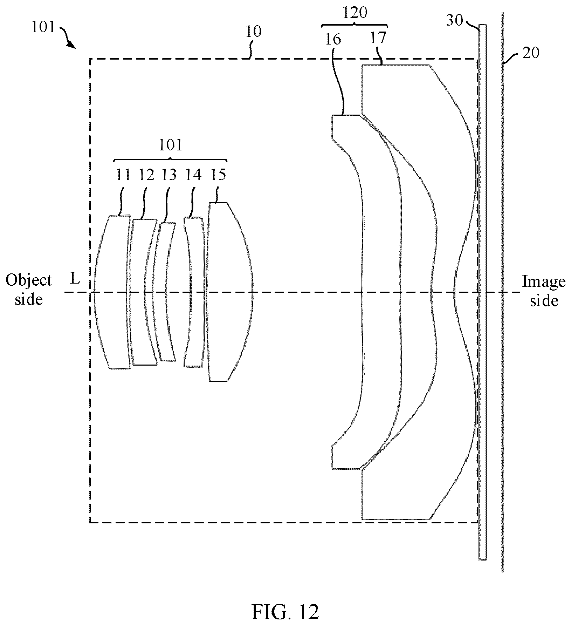

FIG. 12 is a diagram of a simulation structure when a camera lens component in a camera module is in a working state according to Embodiment 5 of this application.

In this embodiment, as shown in FIG. 12, the camera lens component 10 includes seven lens elements with focal power, and the first lens element unit 110 includes five lens elements with focal power, for example, a first lens element 11, a second lens element 12, a third lens element 13, a fourth lens element 14, and a fifth lens element 15. The second lens element unit 120 includes two lens elements with focal power, for example, a sixth lens element 16 and a seventh lens element 17. The first lens element 11, the second lens element 12, the third lens element 13, the fourth lens element 14, the fifth lens element 15, the sixth lens element 16, and the seventh lens element 17 are sequentially arranged along an optical axis L from an object side to an image side.

In other words, in the camera module 101, from the object side to the image side along a direction of the optical axis L, an aperture (not shown in the figure), the first lens element 11, the second lens element 12, the third lens element 13, the fourth lens element 14, the fifth lens element 15, the sixth lens element 16, the seventh lens element 17, a light filter 30, and an image sensor 20 are sequentially arranged. Light entering the camera module 101 sequentially passes through the camera lens component 10 and the light filter 30 in the foregoing sequence and is irradiated onto the image sensor 20, and is finally imaged on a photosensitive surface of the image sensor 20.

The first lens element 11 may have positive focal power, at least a part that is of an object-side surface of the first lens element 11 and that corresponds to the optical axis may be a convex surface, and at least a part that is of an image-side surface of the first lens element 11 and that corresponds to the optical axis may be a concave surface.

The second lens element 12 may have negative focal power, at least a part that is of an object-side surface of the second lens element 12 and that corresponds to the optical axis may be a concave surface, and at least a part that is of an image-side surface of the second lens element 12 and that corresponds to the optical axis may be a concave surface.

The third lens element 13 may have positive focal power, at least a part that is of an object-side surface of the third lens element 13 and that corresponds to the optical axis may be a convex surface, and at least a part that is of an image-side surface of the third lens element 13 and that corresponds to the optical axis may be a concave surface.

The fourth lens element 14 may have negative focal power, at least a part that is of an object-side surface of the fourth lens element 14 and that corresponds to the optical axis may be a concave surface, and at least a part that is of an image-side surface of the fourth lens element 14 and that corresponds to the optical axis is a concave surface.

The fifth lens element 15 may have positive focal power, at least a part that is of an object-side surface of the fifth lens element 15 and that corresponds to the optical axis may be a convex surface, and at least a part that is of an image-side surface of the fifth lens element 15 and that corresponds to the optical axis may be a convex surface.

The sixth lens element 16 may have positive focal power, at least a part that is of an object-side surface of the sixth lens element 16 and that corresponds to the optical axis may be a convex surface, and at least a part that is of an image-side surface of the sixth lens element 16 and that corresponds to the optical axis may be a concave surface. At least one of the object-side surface and the image-side surface of the sixth lens element 16 is a toric surface.

The seventh lens element 17 may have negative focal power, at least a part that is of an object-side surface of the seventh lens element 17 and that corresponds to the optical axis may be a convex surface, and at least a part that is of an image-side surface of the seventh lens element 17 and that corresponds to the optical axis may be a concave surface. At least one of the object-side surface and the image-side surface of the seventh lens element 17 is a toric surface.

When the camera lens component 10 is in a working state, as shown in FIG. 12, there is a large spacing on an optical axis between the object-side surface of the fifth lens element 15 in the first lens element unit 110 and the image-side surface of the sixth lens element 16 in the second lens element unit 120, and the camera lens component 10 can implement high-quality imaging with a wide aperture and a large target surface. When the camera lens component 10 switches from a working state to a non-working state, all lens elements of the first lens element unit 110 may move toward the second lens element unit 120 along the optical axis, to compress a spacing between the first lens element unit 110 and the second lens element unit 120, and reduce lengths of the camera lens component 10 and the camera module 101.

The following describes optical parameters and performance of the camera lens component 10 and each lens element when the camera lens component 10 is in a working state.

A half of image height IMH of the camera lens component 10 is equal to 8.15 mm, an f-number F# of the camera lens component 10 is equal to 2.00, and a ratio IMH/F# of the half of image height IMH of the camera lens component 10 to the f-number F# of the camera lens component 10 is equal to 4.075 mm.

A spacing GD between the first lens element unit 110 and the second lens element unit 120 on an axis is equal to 3.288 mm, and a total track length TTL of the camera lens component 10 is equal to 12.288 mm, a ratio of the spacing GD between the first lens element unit 110 and the second lens element unit 120 on the optical axis to the total track length TTL of the camera lens component 10 is GD/TTL=0.27.

A focal length EFL of the camera lens component 10 is 9.21 mm, and a ratio of the spacing GD between the first lens element unit 110 and the second lens element unit 120 on the optical axis to the focal length EFL of the camera lens component 10 is GD/EFL=0.36.

A ratio of a focal length EFL 1 of the first lens element unit 110 to the focal length EFL of the camera lens component 10 is EFL 1/EFL=0.989.

A ratio of a half of image height IMH of the camera lens component 10 to the total track length TTL of the camera lens component 10 is IMH/TTL=0.663.

A ratio of the focal length EFL of the camera lens component 10 to the total track length TTL of the camera lens component 10 is EFL/TTL=0.75.

A half field of view HFOV of the camera lens component 10 is equal to 42°, and the focal length EFL of the camera lens component 10 and a maximum half field of view HFOV of the camera lens component 10 satisfy the following: EFL*tan (HFOV)=8.29 mm.

Table 5.1 shows an optical parameter of each lens element in a camera module according to Embodiment 5 of this application.

| Lens element | Surface number | Curvature radius | Thickness | Focal length | Refractive index | Abbe coefficient |
|---|---|---|---|---|---|---|
| | Object surface | Unlimited | Unlimited | - | - | - |
| | Aperture | Unlimited | 0.00 | - | - | - |
| L1 | S1 | 5.70 | 0.97 | 7.01E+00 | 1.89E+00 | 3.72E+01 |
| | S2 | 63.91 | 0.11 | | | |
| L2 | S3 | -60.54 | 0.44 | -8.18E+00 | 1.64E+00 | 2.40E+01 |
| | S4 | 5.75 | 0.24 | | | |
| L3 | S5 | 7.53 | 0.40 | 5.84E+01 | 1.69E+00 | 1.82E+01 |
| | S6 | 9.06 | 0.74 | | | |
| L4 | S7 | -24.27 | 0.40 | -2.31E+01 | 1.69E+00 | 1.82E+01 |
| | S8 | 46.19 | 0.07 | | | |
| L5 | S9 | 27.68 | 1.39 | 8.38E+00 | 1.55E+00 | 5.60E+01 |
| | S10 | -5.39 | 3.29 | | | |
| L6 | S11 | 36.93 | 1.14 | 1.39E+03 | 1.68E+00 | 1.92E+01 |
| | S12 | 37.96 | 0.93 | | | |
| L7 | S13 | 4.52 | 0.70 | -1.71E+01 | 1.55E+00 | 5.60E+01 |
| | S14 | 2.88 | 0.75 | | | |
| IR | S15 | Unlimited | 0.2142 | - | 1.52 | 64.17 |
| | S16 | Unlimited | 0.482653183 | | | |
| | Image surface | Unlimited | 0 | - | - | - |

L1 represents the first lens element 11. L2 represents the second lens element 12. L3 represents the third lens element 13. L4 represents the fourth lens element 14. L5 represents the fifth lens element 15. L6 represents the sixth lens element 16. L7 represents the seventh lens element 17. IR represents the light filter 30.

For specific illustrations of S1 to S16, the thickness, and the like, refer to Embodiment 1. Details are not described again in this embodiment.

Table 5.2 shows an aspherical coefficient of each lens element in a camera lens component according to Embodiment 5 of this application.

| | | Conic coefficient K | A2 | A4 | A6 | A8 | A10 | A12 | A14 |
|---|---|---|---|---|---|---|---|---|---|
| L1 | S1 | -2.22E-01 | 0.00E+00 | -1.26E-04 | 1.83E-04 | -3.90E-04 | 3.58E-04 | -2.10E-04 | 8.36E-05 |
| | S2 | 2.57E+01 | 0.00E+00 | 5.70E-03 | -2.40E-03 | 1.70E-03 | -1.07E-03 | 5.25E-04 | -1.91E-04 |
| L2 | S3 | -2.18E+01 | 0.00E+00 | 1.12E-02 | -4.96E-03 | 3.88E-03 | -2.53E-03 | 1.27E-03 | -4.76E-04 |
| | S4 | 1.72E+00 | 0.00E+00 | -2.26E-03 | -2.42E-03 | 3.43E-03 | -3.06E-03 | 1.97E-03 | -9.27E-04 |
| L3 | S5 | -6.81E+00 | 0.00E+00 | -2.74E-04 | -6.42E-04 | 7.64E-04 | -5.84E-04 | 3.92E-04 | -2.14E-04 |
| | S6 | -6.53E-01 | 0.00E+00 | 3.83E-03 | -1.38E-03 | 2.06E-03 | -2.76E-03 | 2.54E-03 | -1.58E-03 |
| L4 | S7 | 2.06E+01 | 0.00E+00 | -3.69E-03 | -1.07E-03 | 2.49E-04 | 2.85E-04 | -5.06E-04 | 3.95E-04 |
| | S8 | 3.71E+01 | 0.00E+00 | -2.50E-03 | -4.43E-03 | 4.88E-03 | -4.03E-03 | 2.41E-03 | -1.03E-03 |
| L5 | S9 | 2.53E+01 | 0.00E+00 | 1.13E-04 | -3.54E-03 | 3.68E-03 | -2.63E-03 | 1.35E-03 | -5.00E-04 |
| | S10 | 5.67E-03 | 0.00E+00 | -1.30E-03 | -3.45E-04 | 4.53E-04 | -3.83E-04 | 2.20E-04 | -8.83E-05 |
| L6 | S11 | 1.16E+01 | 0.00E+00 | -1.08E-03 | 3.81E-04 | -3.16E-04 | 1.22E-04 | -3.04E-05 | 5.23E-06 |
| | S12 | 3.63E+01 | 0.00E+00 | -1.95E-03 | 7.79E-04 | -4.14E-04 | 1.32E-04 | -2.74E-05 | 3.85E-06 |
| L7 | S13 | -1.16E+01 | 0.00E+00 | -7.34E-03 | -1.16E-03 | -1.53E-04 | 1.79E-04 | -4.52E-05 | 6.36E-06 |
| | S14 | -5.68E+00 | 0.00E+00 | 5.02E-03 | -4.64E-03 | 1.10E-03 | -1.55E-04 | 1.47E-05 | -1.01E-06 |
| | | A16 | A18 | A20 | A22 | A24 | A26 | 28 | 30 |
| L1 | S1 | -2.32E-05 | 4.57E-06 | -6.41E-07 | 6.36E-08 | -4.34E-09 | 1.95E-10 | -5.16E-12 | 6.13E-14 |
| | S2 | 5.02E-05 | -9.47E-06 | 1.28E-06 | -1.21E-07 | 7.89E-09 | -3.36E-10 | 8.42E-12 | -9.41E-14 |
| L2 | S3 | 1.31E-04 | -2.60E-05 | 3.73E-06 | -3.78E-07 | 2.64E-08 | -1.20E-09 | 3.23E-11 | -3.86E-13 |
| | S4 | 3.16E-04 | -7.72E-05 | 1.34E-05 | -1.65E-06 | 1.39E-07 | -7.63E-09 | 2.46E-10 | -3.54E-12 |
| L3 | S5 | 8.45E-05 | -2.31E-05 | 4.35E-06 | -5.57E-07 | 4.77E-08 | -2.61E-09 | 8.23E-11 | -1.14E-12 |
| | S6 | 6.76E-04 | -2.02E-04 | 4.23E-05 | -6.18E-06 | 6.16E-07 | -3.98E-08 | 1.51E-09 | -2.52E-11 |
| L4 | S7 | -1.93E-04 | 6.38E-05 | -1.46E-05 | 2.30E-06 | -2.45E-07 | 1.69E-08 | -6.75E-10 | 1.19E-11 |
| | S8 | 3.18E-04 | -7.04E-05 | 1.12E-05 | -1.26E-06 | 9.78E-08 | -4.98E-09 | 1.50E-10 | -2.01E-12 |
| L5 | S9 | 1.33E-04 | -2.58E-05 | 3.58E-06 | -3.55E-07 | 2.44E-08 | -1.10E-09 | 2.95E-11 | -3.53E-13 |
| | S10 | 2.53E-05 | -5.24E-06 | 7.81E-07 | -8.28E-08 | 6.07E-09 | -2.93E-10 | 8.31E-12 | -1.05E-13 |
| L6 | S11 | -6.41E-07 | 5.67E-08 | -3.65E-09 | 1.69E-10 | -5.47E-12 | 1.18E-13 | -1.51E-15 | 8.75E-18 |
| | S12 | -3.80E-07 | 2.68E-08 | -1.36E-09 | 4.92E-11 | -1.24E-12 | 2.08E-14 | -2.07E-16 | 9.25E-19 |
| L7 | S13 | -5.84E-07 | 3.72E-08 | -1.68E-09 | 5.40E-11 | -1.21E-12 | 1.80E-14 | -1.60E-16 | 6.51E-19 |
| | S14 | 5.08E-08 | -1.90E-09 | 5.29E-11 | -1.08E-12 | 1.57E-14 | -1.53E-16 | 9.04E-19 | -2.43E-21 |

It can be learned from Table 5.2 that each lens element in the camera lens component 10 is an aspheric lens element, and the camera lens component 10 includes 14 aspheric surfaces. Surface types z of the aspheric surfaces of the lens elements in the camera lens component 10 may be calculated by using the following aspheric surface formula:

$$z = \frac{cr^2}{1 + \sqrt{1 - Kc^2r^2}} + \sum_i Air^i$$

Here, z is a vector height of the aspheric surface, r is a radial coordinate of the aspheric surface, c is a spherical curvature of a vertex of the aspheric surface, K is a conic coefficient, i is a coefficient term of the aspheric surface, and is 30 in this embodiment, and Ai represents an $i^{th}$-order aspheric coefficient.

For optical parameters of the camera module 101 formed by the foregoing lens elements, refer to Table 5.3.

Table 5.3 shows optical parameters of a camera module according to Embodiment 5 of this application.

| Optical parameters | |
| --- | --- |
| Focal length of a camera lens component: EFL/mm | 9.21 |
| F-number of the camera lens component: F# | 2 |
| Half of image height of the camera lens component: IMH/mm | 8.15 |
| Half field of view of the camera lens component: HFOV/degree | 42 |
| Total track length of the camera lens component: TTL/mm | 12.288 |
| Spacing GD between a first lens element unit and a second lens element unit | 3.288 |

It can be learned from Table 5.3 that the camera lens component 10 provided in Embodiment 5 of this application can implement features of a wide aperture and a large target surface when the camera lens component 10 is in a working state, to help improve imaging quality and imaging effect of the camera module 101. In addition, when the camera lens component 10 is switched to a non-working state, a spacing that can be compressed is large, so that thinning of the camera lens component 10 and the camera module 101 in the non-working state can be implemented.

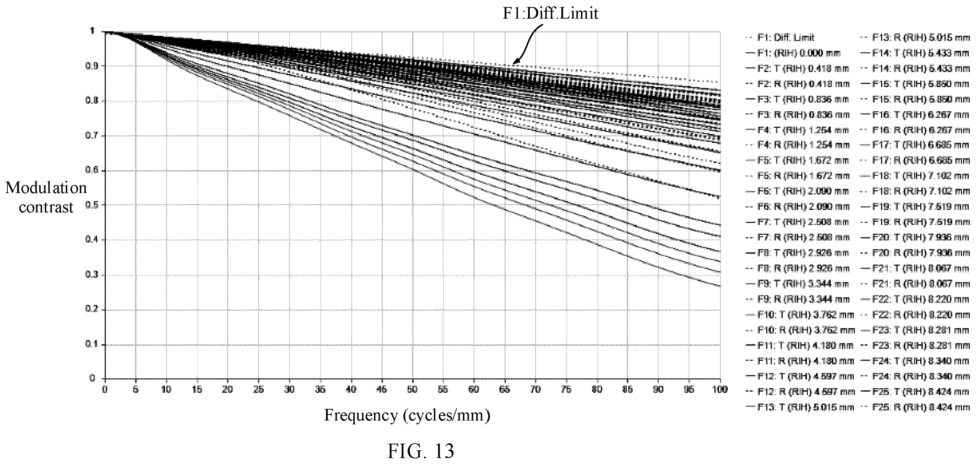

FIG. 13 is a curve diagram of a modulation transfer function of a camera module according to Embodiment 5 of this application.

In FIG. 13, a horizontal coordinate represents different frequencies, and a vertical coordinate represents contrast modulation, and can reflect imaging resolution of different spatial frequencies. A solid line in the figure represents a sagittal field of view, a dashed line in the figure represents a meridian field of view, and a line F1:Diff.Limit in the figure shows a limit curve of high-quality imaging. A line closer to the limit curve indicates better imaging quality. It can be learned from FIG. 13 that the camera module provided in Embodiment 5 of this application can implement high-quality imaging.

Embodiment 6

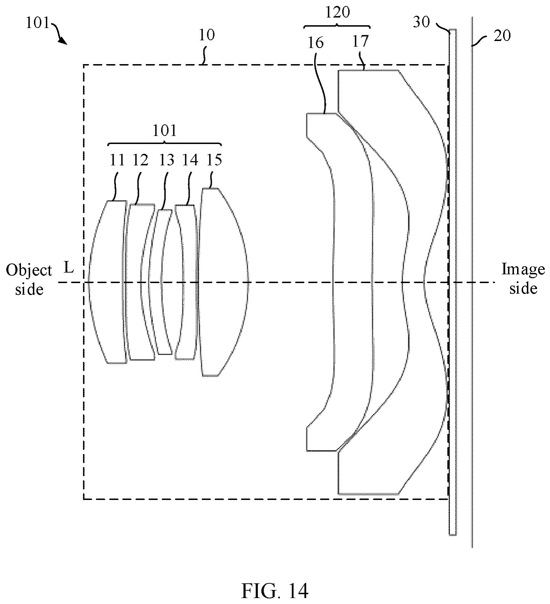

FIG. 14 is a diagram of a simulation structure when a camera lens component in a camera module is in a working state according to Embodiment 6 of this application.

In this embodiment, as shown in FIG. 14, the camera lens component 10 includes seven lens elements with focal power, and the first lens element unit 110 includes five lens elements with focal power, for example, a first lens element 11, a second lens element 12, a third lens element 13, a fourth lens element 14, and a fifth lens element 15. The second lens element unit 120 includes two lens elements with focal power, for example, a sixth lens element 16 and a seventh lens element 17. The first lens element 11, the second lens element 12, the third lens element 13, the fourth lens element 14, the fifth lens element 15, the sixth lens element 16, and the seventh lens element 17 are sequentially arranged along an optical axis L from an object side to an image side.

In other words, in the camera module 101, from the object side to the image side along a direction of the optical axis L, an aperture (not shown in the figure), the first lens element 11, the second lens element 12, the third lens element 13, the fourth lens element 14, the fifth lens element 15, the sixth lens element 16, the seventh lens element 17, a light filter 30, and an image sensor 20 are sequentially arranged. Light entering the camera module 101 sequentially passes through the camera lens component 10 and the light filter 30 in the foregoing sequence and is irradiated onto the image sensor 20, and is finally imaged on a photosensitive surface of the image sensor 20.

The first lens element 11 may have positive focal power, at least a part that is of an object-side surface of the first lens element 11 and that corresponds to the optical axis may be a convex surface, and at least a part that is of an image-side surface of the first lens element 11 and that corresponds to the optical axis may be a concave surface.

The second lens element 12 may have negative focal power, at least a part that is of an object-side surface of the second lens element 12 and that corresponds to the optical axis may be a concave surface, and at least a part that is of an image-side surface of the second lens element 12 and that corresponds to the optical axis may be a concave surface.

The third lens element 13 may have positive focal power, at least a part that is of an object-side surface of the third lens element 13 and that corresponds to the optical axis may be a convex surface, and at least a part that is of an image-side surface of the third lens element 13 and that corresponds to the optical axis may be a concave surface.

The fourth lens element 14 may have negative focal power, at least a part that is of an object-side surface of the fourth lens element 14 and that corresponds to the optical axis may be a concave surface, and at least a part that is of an image-side surface of the fourth lens element 14 and that corresponds to the optical axis is a concave surface.

The fifth lens element 15 may have positive focal power, at least a part that is of an object-side surface of the fifth lens element 15 and that corresponds to the optical axis may be a convex surface, and at least a part that is of an image-side surface of the fifth lens element 15 and that corresponds to the optical axis may be a convex surface.

The sixth lens element 16 may have positive focal power, at least a part that is of an object-side surface of the sixth lens element 16 and that corresponds to the optical axis may be a convex surface, and at least a part that is of an image-side surface of the sixth lens element 16 and that corresponds to the optical axis may be a concave surface. At least one of the object-side surface and the image-side surface of the sixth lens element 16 is a toric surface.

The seventh lens element 17 may have negative focal power, at least a part that is of an object-side surface of the seventh lens element 17 and that corresponds to the optical axis may be a convex surface, and at least a part that is of an image-side surface of the seventh lens element 17 and that corresponds to the optical axis may be a concave surface. At least one of the object-side surface and the image-side surface of the seventh lens element 17 is a toric surface.

When the camera lens component 10 is in a working state, as shown in FIG. 14, there is a large spacing on an optical axis between the object-side surface of the fifth lens element 15 in the first lens element unit 110 and the image-side surface of the sixth lens element 16 in the second lens element unit 120, and the camera lens component 10 can implement high-quality imaging with a wide aperture and a large target surface. When the camera lens component 10 switches from a working state to a non-working state, all lens elements of the first lens element unit 110 may move toward the second lens element unit 120 along the optical axis, to compress a spacing between the first lens element unit 110 and the second lens element unit 120, and reduce lengths of the camera lens component 10 and the camera module 101.

The following describes optical parameters and performance of the camera lens component 10 and each lens element when the camera lens component 10 is in a working state.

A half of image height IMH of the camera lens component 10 is equal to 8.32 mm, an f-number F# of the camera lens component 10 is equal to 1.71, and a ratio IMH/F# of the half of image height IMH of the camera lens component 10 to the f-number F# of the camera lens component 10 is equal to 4.865 mm.

A spacing GD between the first lens element unit 110 and the second lens element unit 120 on an axis is equal to 2.7 mm, and a total track length TTL of the camera lens component 10 is equal to 12.15 mm, a ratio of the spacing GD between the first lens element unit 110 and the second lens element unit 120 on the optical axis to the total track length TTL of the camera lens component 10 is GD/TTL=0.22.

A focal length EFL of the camera lens component 10 is 8.82 mm, and a ratio of the spacing GD between the first lens element unit 110 and the second lens element unit 120 on the optical axis to the focal length EFL of the camera lens component 10 is GD/EFL=0.306.

A ratio of a focal length EFL 1 of the first lens element unit 110 to the focal length EFL of the camera lens component 10 is EFL 1/EFL=1.02.

A ratio of a half of image height IMH of the camera lens component 10 to the total track length TTL of the camera lens component 10 is IMH/TTL=0.685.

A ratio of the focal length EFL of the camera lens component 10 to the total track length TTL of the camera lens component 10 is EFL/TTL=0.726.

A half field of view HFOV of the camera lens component 10 is equal to 43°, and the focal length EFL of the camera lens component 10 and a maximum half field of view HFOV of the camera lens component 10 satisfy the following: EFL*tan (HFOV)=8.22 mm.

Table 6.1 shows an optical parameter of each lens element in a camera module according to Embodiment 6 of this application.

| Lens element | Surface number | Curvature radius | Thickness | Focal length | Refractive index | Abbe coefficient |
|---|---|---|---|---|---|---|
| | Object surface | Unlimited | Unlimited | - | - | - |
| | Aperture | Unlimited | 0.00 | - | - | - |
| L1 | S1 | 5.73 | 1.08 | 6.58E+00 | 1.89E+00 | 3.72E+01 |
| | S2 | 300.89 | 0.11 | | | |
| L2 | S3 | -36.20 | 0.47 | -7.71E+00 | 1.64E+00 | 2.40E+01 |
| | S4 | 5.74 | 0.26 | | | |
| L3 | S5 | 7.41 | 0.40 | 5.12E+01 | 1.69E+00 | 1.82E+01 |
| | S6 | 9.18 | 0.69 | | | |

(continued)

| Lens element | Surface number | Curvature radius | Thickness | Focal length | Refractive index | Abbe coefficient |
|---|---|---|---|---|---|---|
| L4 | S7 | -30.22 | 0.41 | -2.17E+01 | 1.69E+00 | 1.82E+01 |
| | S8 | 29.76 | 0.05 | | | |
| L5 | S9 | 24.27 | 1.59 | 8.37E+00 | 1.55E+00 | 5.60E+01 |
| | S10 | -5.50 | 2.69 | | | |
| L6 | S11 | 33.37 | 1.23 | 4.85E+02 | 1.68E+00 | 1.92E+01 |
| | S12 | 36.59 | 0.96 | | | |
| L7 | S13 | 3.92 | 0.70 | -2.01E+01 | 1.55E+00 | 5.60E+01 |
| | S14 | 2.71 | 0.80 | | | |
| IR | S15 | Unlimited | 0.2142 | - | 1.52 | 64.17 |
| | S16 | Unlimited | 0.48519673 | | | |
| | Image surface | Unlimited | 0 | - | - | - |

L1 represents the first lens element 11. L2 represents the second lens element 12. L3 represents the third lens element 13. L4 represents the fourth lens element 14. L5 represents the fifth lens element 15. L6 represents the sixth lens element 16. L7 represents the seventh lens element 17. IR represents the light filter 30.

For specific illustrations of S1 to S16, the thickness, and the like, refer to Embodiment 1. Details are not described again in this embodiment.

Table 6.2 shows an aspherical coefficient of each lens element in a camera lens component according to Embodiment 6 of this application.

| | | Conic coefficient K | A2 | A4 | A6 | A8 | A10 | A12 | A14 |
|---|---|---|---|---|---|---|---|---|---|
| L1 | S1 | -2.20E-01 | 0.00E+00 | -2.18E-04 | 4.17E-04 | -6.54E-04 | 5.55E-04 | -3.11E-04 | 1.20E-04 |
| | S2 | 3.00E+01 | 0.00E+00 | 5.75E-03 | -2.23E-03 | 1.51E-03 | -9.49E-04 | 4.60E-04 | -1.62E-04 |
| L2 | S3 | -1.91E+01 | 0.00E+00 | 1.11E-02 | -4.17E-03 | 2.75E-03 | -1.59E-03 | 7.24E-04 | -2.48E-04 |
| | S4 | 1.71E+00 | 0.00E+00 | -1.89E-03 | -2.76E-03 | 3.95E-03 | -3.75E-03 | 2.50E-03 | -1.19E-03 |
| L3 | S5 | -6.88E+00 | 0.00E+00 | 3.34E-04 | -8.24E-04 | 6.71E-04 | -5.60E-04 | 3.96E-04 | -2.03E-04 |
| | S6 | -8.28E-01 | 0.00E+00 | 4.33E-03 | -2.00E-03 | 2.63E-03 | -3.12E-03 | 2.54E-03 | -1.42E-03 |
| L4 | S7 | 2.83E+01 | 0.00E+00 | -4.00E-03 | -7.82E-04 | 5.16E-04 | -6.35E-04 | 5.39E-04 | -2.97E-04 |
| | S8 | 3.34E+01 | 0.00E+00 | -2.49E-03 | -4.51E-03 | 5.20E-03 | -4.29E-03 | 2.49E-03 | -1.03E-03 |
| L5 | S9 | 2.46E+01 | 0.00E+00 | 4.04E-04 | -3.65E-03 | 3.86E-03 | -2.77E-03 | 1.41E-03 | -5.15E-04 |
| | S10 | 3.85E-02 | 0.00E+00 | -1.03E-03 | -8.50E-04 | 9.06E-04 | -5.80E-04 | 2.39E-04 | -6.53E-05 |
| L6 | S11 | 2.61E+01 | 0.00E+00 | -1.63E-03 | 6.48E-04 | -3.81E-04 | 1.34E-04 | -3.23E-05 | 5.51E-06 |
| | S12 | 3.65E+01 | 0.00E+00 | -3.23E-03 | 1.14E-03 | -4.31E-04 | 1.21E-04 | -2.45E-05 | 3.48E-06 |
| L7 | S13 | -1.04E+01 | 0.00E+00 | -3.38E-03 | -2.95E-03 | 1.73E-04 | 1.77E-04 | -5.71E-05 | 9.15E-06 |
| | S14 | -4.58E+00 | 0.00E+00 | 5.23E-03 | -5.33E-03 | 1.32E-03 | -1.92E-04 | 1.89E-05 | -1.32E-06 |
| | | A16 | A18 | A20 | A22 | A24 | A26 | 28 | 30 |
| L1 | S1 | -3.29E-05 | 6.46E-06 | -9.11E-07 | 9.14E-08 | -6.36E-09 | 2.91E-10 | -7.89E-12 | 9.57E-14 |
| | S2 | 4.13E-05 | -7.59E-06 | 1.00E-06 | -9.44E-08 | 6.13E-09 | -2.62E-10 | 6.59E-12 | -7.41E-14 |

(continued)

| | | Conic coefficient K | A2 | A4 | A6 | A8 | A10 | A12 | A14 |
|---|---|---|---|---|---|---|---|---|---|
| L2 | S3 | 6.31E-05 | -1.18E-05 | 1.60E-06 | -1.55E-07 | 1.05E-08 | -4.63E-10 | 1.21E-11 | -1.40E-13 |
| | S4 | 4.03E-04 | -9.81E-05 | 1.71E-05 | -2.11E-06 | 1.80E-07 | -9.99E-09 | 3.27E-10 | -4.75E-12 |
| L3 | S5 | 7.28E-05 | -1.82E-05 | 3.16E-06 | -3.78E-07 | 3.05E-08 | -1.57E-09 | 4.68E-11 | -6.09E-13 |
| | S6 | 5.54E-04 | -1.54E-04 | 3.06E-05 | -4.29E-06 | 4.16E-07 | -2.64E-08 | 9.83E-10 | -1.64E-11 |
| L4 | S7 | 1.07E-04 | -2.56E-05 | 3.96E-06 | -3.68E-07 | 1.52E-08 | 4.27E-10 | -6.93E-11 | 2.04E-12 |
| | S8 | 3.03E-04 | -6.46E-05 | 9.93E-06 | -1.09E-06 | 8.31E-08 | -4.17E-09 | 1.24E-10 | -1.65E-12 |
| L5 | S9 | 1.36E-04 | -2.60E-05 | 3.60E-06 | -3.57E-07 | 2.46E-08 | -1.12E-09 | 3.01E-11 | -3.64E-13 |
| | S10 | 1.17E-05 | -1.32E-06 | 7.27E-08 | 1.77E-09 | -6.11E-10 | 4.43E-11 | -1.50E-12 | 2.01E-14 |
| L6 | S11 | -6.73E-07 | 5.95E-08 | -3.81E-09 | 1.74E-10 | -5.57E-12 | 1.18E-13 | -1.48E-15 | 8.39E-18 |
| | S12 | -3.52E-07 | 2.55E-08 | -1.33E-09 | 4.95E-11 | -1.28E-12 | 2.17E-14 | -2.19E-16 | 9.89E-19 |
| L7 | S13 | -9.35E-07 | 6.56E-08 | -3.25E-09 | 1.13E-10 | -2.75E-12 | 4.40E-14 | -4.19E-16 | 1.80E-18 |
| | S14 | 6.74E-08 | -2.54E-09 | 7.06E-11 | -1.43E-12 | 2.07E-14 | -2.01E-16 | 1.18E-18 | -3.19E-21 |

It can be learned from Table 6.2 that each lens element in the camera lens component 10 is an aspheric lens element, and the camera lens component 10 includes 14 aspheric surfaces. Surface types z of the aspheric surfaces of the lens elements in the camera lens component 10 may be calculated by using the following aspheric surface formula:

$$z = \frac{cr^2}{1 + \sqrt{1 - Kc^2r^2}} + \sum_i Air^i$$

Here, z is a vector height of the aspheric surface, r is a radial coordinate of the aspheric surface, c is a spherical curvature of a vertex of the aspheric surface, K is a conic coefficient, i is a coefficient term of the aspheric surface, and is 30 in this embodiment, and Ai represents an ith-order aspheric coefficient.

For optical parameters of the camera module 101 formed by the foregoing lens elements, refer to Table 6.3.

Table 6.3 shows optical parameters of a camera module according to Embodiment 6 of this application.

| Optical parameters | |
|---|---|
| Focal length of a camera lens component: EFL/mm | 8.82 |
| F-number of the camera lens component: F# | 1.71 |
| Half of image height of the camera lens component: IMH/mm | 8.32 |
| Half field of view of the camera lens component: HFOV/degree | 43 |
| Total track length of the camera lens component: TTL/mm | 12.15 |
| Spacing GD between a first lens element unit and a second lens element unit | 2.7 |

It can be learned from Table 6.3 that the camera lens component 10 provided in Embodiment 6 of this application can implement features of a wide aperture and a large target surface when the camera lens component 10 is in a working state, to help improve imaging quality and imaging effect of the camera module 101. In addition, when the camera lens component 10 is switched to a non-working state, a spacing that can be compressed is large, so that thinning of the camera lens component 10 and the camera module 101 in the non-working state can be implemented.

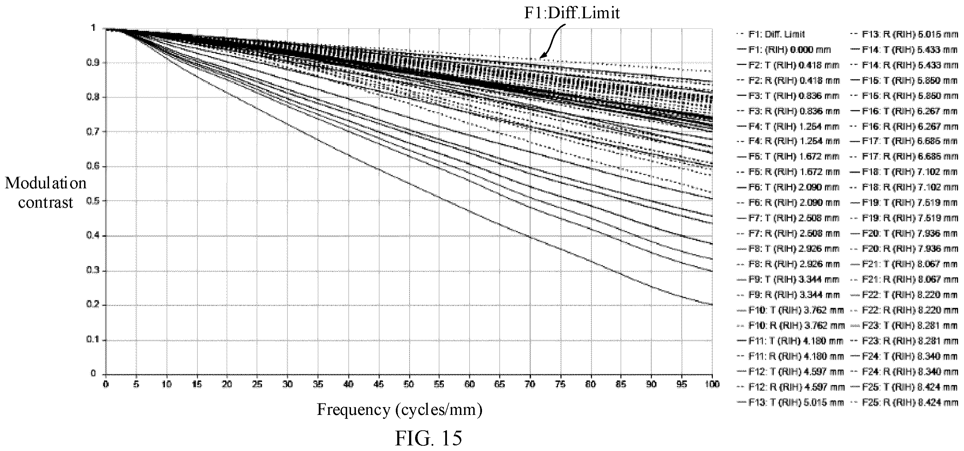

FIG. 15 is a curve diagram of a modulation transfer function of a camera module according to Embodiment 6 of this application.

In FIG. 15, a horizontal coordinate represents different frequencies, and a vertical coordinate represents contrast modulation, and can reflect imaging resolution of different spatial frequencies. A solid line in the figure represents a sagittal field of view, a dashed line in the figure represents a meridian field of view, and a line F1:Diff.Limit in the figure shows a limit curve of high-quality imaging. A line closer to the limit curve indicates better imaging quality. It can be learned from FIG. 15 that the camera module provided in Embodiment 6 of this application can implement high-quality imaging.

It should be noted that values and value ranges in embodiments of this application are approximate values, and there may be an error within a specific range. A person skilled in the art may consider that the error is negligible.

In descriptions of embodiments of this application, it should be noted that, unless otherwise clearly specified and limited, terms "installation", "connection", and "connected" should be understood in a broad sense. For example, the connection may be a fixed connection, may be an indirect connection through an intermediate medium, or may be an internal connection between two elements or an interaction relationship between two elements. A person of ordinary skill in the art may understand specific meanings of the foregoing terms in embodiments of this application based on a specific situation. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A camera lens component, comprising at least a first lens element unit and a second lens element unit that are sequentially arranged from an object side to an image side along an optical axis, wherein the first lens element unit and the second lens element unit each comprise a lens element with focal power, and there are a plurality of lens elements in the first lens element unit;

   when the camera lens component is in a working state, the camera lens component satisfies a conditional expression: IMH/F#>4.0, wherein IMH is a half of image height of the camera lens component, and F# is an f-number of the camera lens component;
   when the camera lens component is in the working state, the camera lens component further satisfies a conditional expression: 0.2<GD/TTL<0.5, wherein GD is a spacing between the first lens element unit and the second lens element unit on the optical axis, and TTL is a total track length of the camera lens component; and the first lens element unit is movably disposed along the optical axis, and all lens elements of the first lens element unit move toward the second lens element unit along the optical axis, so that the camera lens component switches from the working state to a non-working state.

2. The camera lens component according to claim 1, wherein when the camera lens component is in the working state, the f-number of the camera lens component satisfies the following: 1.1<F#<2.

3. The camera lens component according to claim 1 or 2, wherein when the camera lens component is in the working state, the camera lens component further satisfies a conditional expression: 0.20<GD/EFL<0.60, wherein EFL is a focal length of the camera lens component.

4. The camera lens component according to any one of claims 1 to 3, wherein when the camera lens component is in the working state, the camera lens component further satisfies a conditional expression: 0.9<EFL1/EFL<1.1, wherein EFL1 is a focal length of the first lens element unit.

5. The camera lens component according to any one of claims 1 to 4, wherein when the camera lens component is in the working state, the camera lens component further satisfies a conditional expression: IMH/TTL<0.7.

6. The camera lens component according to any one of claims 1 to 5, wherein when the camera lens component is in the working state, the camera lens component further satisfies a conditional expression: 0.6<EFL/TTL<0.9.

7. The camera lens component according to any one of claims 1 to 6, wherein when the camera lens component is in the working state, the camera lens component further satisfies a conditional expression: EFL*tan (HFOV)≥8.00 mm, wherein HFOV is a half field of view of the camera lens component.

8. The camera lens component according to any one of claims 1 to 7, wherein a quantity of lens elements in the first lens element unit is greater than or equal to 4.

9. The camera lens component according to any one of claims 1 to 8, wherein a quantity of lens elements in the second lens element unit is less than or equal to 3.

10. The camera lens component according to any one of claims 1 to 9, further comprising an aperture, wherein the aperture is located on a side that is of the first lens element unit and that faces the object side; and
the aperture is a variable aperture with a variable opening.

11. The camera lens component according to any one of claims 1 to 10, wherein lens elements of the first lens element unit comprise a first lens element, a second lens element, a third lens element, a fourth lens element, and a fifth lens element; and lens elements of the second lens element unit comprise a sixth lens element and a seventh lens element; and
the first lens element, the fifth lens element, and the sixth lens element each have positive focal power, and the second lens element, the fourth lens element, and the seventh lens element each have negative focal power.

12. The camera lens component according to claim 11, wherein at least one of an object-side surface and an image-side surface of the sixth lens element is a toric surface; and
at least one of an object-side surface and an image-side surface of the seventh lens element is a toric surface.

13. A camera module, comprising at least an image sensor and the camera lens component according to any one of claims 1 to 12, wherein the image sensor is located on a side that is of the camera lens component and that faces an image side.

14. An electronic device, comprising at least a housing and the camera module according to claim 13, wherein the camera module is disposed on the housing;

when the camera lens component is in a working state, at least a part of the first lens element unit of the camera lens component is located outside the housing; and
when the camera lens component is switched from the working state to a non-working state, the first lens element unit moves toward the housing along an optical axis.

FIG. 1

FIG. 2

FIG. 3

FIG. 4

FIG. 5

EP 4 660 680 A1

FIG. 6

FIG. 7

EP 4 660 680 A1

FIG. 8

F1:Diff.Limit

Modulation contrast

Frequency (cycles/mm)

FIG. 9

F1: Diff. Limit
F1: (RIH) 0.000 mm
F2: T (RIH) 0.418 mm
F2: R (RIH) 0.418 mm
F3: T (RIH) 0.836 mm
F3: R (RIH) 0.836 mm
F4: T (RIH) 1.254 mm
F4: R (RIH) 1.254 mm
F5: T (RIH) 1.672 mm
F5: R (RIH) 1.672 mm
F6: T (RIH) 2.090 mm
F6: R (RIH) 2.090 mm
F7: T (RIH) 2.508 mm
F7: R (RIH) 2.508 mm
F8: T (RIH) 2.926 mm
F8: R (RIH) 2.926 mm
F9: T (RIH) 3.344 mm
F9: R (RIH) 3.344 mm
F10: T (RIH) 3.762 mm
F10: R (RIH) 3.762 mm
F11: T (RIH) 4.180 mm
F11: R (RIH) 4.180 mm
F12: T (RIH) 4.597 mm
F12: R (RIH) 4.597 mm
F13: T (RIH) 5.015 mm

F13: R (RIH) 5.015 mm
F14: T (RIH) 5.433 mm
F14: R (RIH) 5.433 mm
F15: T (RIH) 5.850 mm
F15: R (RIH) 5.850 mm
F16: T (RIH) 6.267 mm
F16: R (RIH) 6.267 mm
F17: T (RIH) 6.685 mm
F17: R (RIH) 6.685 mm
F18: T (RIH) 7.102 mm
F18: R (RIH) 7.102 mm
F19: T (RIH) 7.519 mm
F19: R (RIH) 7.519 mm
F20: T (RIH) 7.936 mm
F20: R (RIH) 7.936 mm
F21: T (RIH) 8.067 mm
F21: R (RIH) 8.067 mm
F22: T (RIH) 8.220 mm
F22: R (RIH) 8.220 mm
F23: T (RIH) 8.281 mm
F23: R (RIH) 8.281 mm
F24: T (RIH) 8.340 mm
F24: R (RIH) 8.340 mm
F25: T (RIH) 8.424 mm
F25: R (RIH) 8.424 mm

45

FIG. 10

FIG. 11

FIG. 12

FIG. 13

FIG. 14

FIG. 15

## INTERNATIONAL SEARCH REPORT

| International application No. |
|---|
| **PCT/CN2024/104833** |

**A. CLASSIFICATION OF SUBJECT MATTER**

G02B7/105(2021.01)i; G02B7/09(2021.01)i; G02B13/00(2006.01)i; G03B13/32(2021.01)i

According to International Patent Classification (IPC) or to both national classification and IPC

**B. FIELDS SEARCHED**

Minimum documentation searched (classification system followed by classification symbols)

IPC:G02B G03B

Documentation searched other than minimum documentation to the extent that such documents are included in the fields searched

Electronic data base consulted during the international search (name of data base and, where practicable, search terms used)

CNTXT, CNKI, ENTXTC, DWPI, WPABS: 不成像, 不工作, 非成像, 非工作, 容纳, 收纳, 透镜, 小型化, 光圈, 像高, 对角线, no, non, imaging, working, store, accommodate, lens, miniaturization, aperture, height, diagonal

**C. DOCUMENTS CONSIDERED TO BE RELEVANT**

| Category* | Citation of document, with indication, where appropriate, of the relevant passages | Relevant to claim No. |
|---|---|---|
| PX | CN 118276285 A (HUAWEI TECHNOLOGIES CO., LTD.) 02 July 2024 (2024-07-02) description, paragraphs 0127-0142 and 0225-0258, and figures 1-3 and 12 | 1-3, 6, 8-9, 13-14 |
| X | CN 115704949 A (HUAWEI TECHNOLOGIES CO., LTD.) 17 February 2023 (2023-02-17) description, paragraphs 0202, 0279, and 0290-0355, and figures 4-8 | 1-14 |
| A | CN 111552135 A (GUANGDONG OPPO MOBILE COMMUNICATIONS CO., LTD.) 18 August 2020 (2020-08-18) entire document | 1-14 |
| A | CN 115201995 A (GUANGDONG OPPO MOBILE COMMUNICATIONS CO., LTD.) 18 October 2022 (2022-10-18) entire document | 1-14 |
| A | JP 2011154213 A (RICOH CO., LTD.) 11 August 2011 (2011-08-11) entire document | 1-14 |
| A | JP 2011203747 A (NIKON CORP.) 13 October 2011 (2011-10-13) entire document | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 September 2024** | **24 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/104833**

| Patent document cited in search report | | | Publication date (day/month/year) | Patent family member(s) | | | Publication date (day/month/year) |
|---|---|---|---|---|---|---|---|
| CN | 118276285 | A | 02 July 2024 | None | | | |
| CN | 115704949 | A | 17 February 2023 | None | | | |
| CN | 111552135 | A | 18 August 2020 | None | | | |
| CN | 115201995 | A | 18 October 2022 | None | | | |
| JP | 2011154213 | A | 11 August 2011 | JP | 5397774 | B2 | 22 January 2014 |
| JP | 2011203747 | A | 13 October 2011 | JP | 5321642 | B2 | 23 October 2013 |

Form PCT/ISA/210 (patent family annex) (July 2022)

**REFERENCES CITED IN THE DESCRIPTION**

**Patent documents cited in the description**

- CN 202310962515